(19) Europäisches Patentamt
European Patent Office
Office européen des brevets

(11) **EP 4 568 205 A1**

(12) **EUROPEAN PATENT APPLICATION**
published in accordance with Art. 153(4) EPC

(43) Date of publication:
**11.06.2025 Bulletin 2025/24**

(21) Application number: **22961798.0**

(22) Date of filing: **14.10.2022**

(51) International Patent Classification (IPC):
***H04L 27/26*** (2006.01)   ***H04W 4/12*** (2009.01)

(52) Cooperative Patent Classification (CPC):
**H04L 27/26; H04W 4/12**

(86) International application number:
**PCT/CN2022/125477**

(87) International publication number:
**WO 2024/077612 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **HE, Jia**
  **Shenzhen, Guangdong 518129 (CN)**
• **DU, Xianfeng**
  **Shenzhen, Guangdong 518129 (CN)**
• **HUANG, Huang**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57)     This application discloses a communication method and apparatus, so that channel estimation can be accurately performed based on a received pilot when a time-frequency resource is multiplexed for a communication signal and a sensing signal for hybrid transmission. A first apparatus sends a communication signal and a sensing signal to a second apparatus on a target transmission resource. The communication signal includes two parts: a pilot signal and a non-pilot signal, a transmission resource occupied by the non-pilot signal overlaps a transmission resource occupied by the sensing signal, and the sensing signal does not occupy a transmission resource used to transmit the pilot signal. The first apparatus does not send the sensing signal on the transmission resource used to transmit the pilot signal, to avoid impact of the sensing signal on the pilot signal in the communication signal. After receiving a pilot signal with which no sensing signal is superposed, the second apparatus may accurately perform channel estimation based on the pilot signal.

First apparatus — Second apparatus

Step 401: Send a communication signal and a sensing signal on a target transmission resource

Step 402: Send first indication information

Step 403: Perform channel estimation based on a pilot signal included in the communication signal

Step 404: Obtain the sensing signal based on the first indication information, to perform target sensing; and perform communication processing based on the communication signal

FIG. 4

**Description**

TECHNICAL FIELD

This application relates to the field of wireless communication technologies, and in particular, to a communication method and apparatus.

BACKGROUND

A sensing technology means that electromagnetic energy is emitted into space, an object in the space reflects an electromagnetic wave after receiving the electromagnetic energy, and related information of the object, for example, a location, a direction, a height, a speed, and a size, may be calculated based on the electromagnetic wave reflected by the object. In 5G and a communication technology that evolves after 5G, a communication device sends a sensing signal to obtain sensing information from an environment. For example, in a self-driving scenario, a vehicle sends a sensing signal to sense whether an obstacle exists in a front environment and sense related information of the obstacle.

Because the communication device further needs to consider a communication service with another communication device when sending the sensing signal, hybrid transmission may be performed on a communication signal and the sensing signal. However, when a time-frequency resource is multiplexed for the communication signal and the sensing signal for hybrid transmission, a signal-to-noise ratio and demodulation of the communication signal are affected to some extent.

How to reduce impact of hybrid transmission of the communication signal and the sensing signal on communication performance is an urgent problem to be resolved.

SUMMARY

This application provides a communication method and apparatus, to reduce impact exerted on communication performance when a time-frequency resource is multiplexed for a communication signal and a sensing signal for hybrid transmission.

According to a first aspect, this application provides a communication method. The method may be applied to a first apparatus, a functional module in the first apparatus, a processor or a chip in the first apparatus, or the like. For example, the method is applied to the first apparatus. The method may include: The first apparatus generates a communication signal and a sensing signal; and the first apparatus sends the communication signal and the sensing signal to a second apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal.

According to the foregoing method, the first apparatus does not send the sensing signal on the transmission resource used to transmit the pilot signal, to avoid impact of the sensing signal on the pilot signal in the communication signal. After receiving a pilot signal with which no sensing signal is superposed, the second apparatus may accurately perform channel estimation based on the pilot signal.

In a possible design, the first apparatus sends first indication information to the second apparatus. The first indication information indicates a transmission resource that is not occupied by the sensing signal in the target transmission resource.

According to the foregoing method, the first apparatus notifies, by using the first indication information, the second apparatus of the transmission resource that is not occupied by the sensing signal in the target transmission resource, and the second apparatus may accurately receive the sensing signal based on the transmission resource that is not occupied by the sensing signal in the target transmission resource.

In a possible design, the transmission resource that is not occupied by the sensing signal includes a first time domain resource occupied by the pilot signal and a frequency domain resource occupied by the pilot signal.

According to the foregoing method, the sensing signal is not sent on a transmission resource block corresponding to the first time domain resource occupied by the pilot signal in the communication signal and the frequency domain resource occupied by the pilot signal, and a transmission resource block in the target transmission resource other than the transmission resource block corresponding to the first time domain resource occupied by the pilot signal and the frequency domain resource occupied by the pilot signal may be used to send the sensing signal. Therefore, the sensing signal is sent on as many transmission resources as possible while it is ensured that the sensing signal does not affect the pilot signal, to improve sensing performance of the second apparatus.

In a possible design, the transmission resource that is not occupied by the sensing signal includes a first time domain resource occupied by the pilot signal and all frequency domain resources of the target transmission resource.

According to the foregoing method, in a time range corresponding to the first time domain resource, the sensing signal is not sent on all the frequency domain resources of the target transmission resource, so that transmission of the sensing signal can be more conveniently controlled based on the transmission resource that is not occupied by the sensing signal.

In a possible design, the transmission resource that is not occupied by the sensing signal includes a first time domain resource occupied by the pilot signal, a second time domain resource adjacent to the first time domain resource, and all frequency domain resources of the target transmission resource.

According to the foregoing method, when duration corresponding to the first time domain resource occupied by the pilot signal is short, the sensing signal is not sent in a time range corresponding to the first time domain resource and the second time domain resource adjacent to the first time domain resource, so that time control can be better performed, and transmission of the sensing signal can be more conveniently controlled.

In a possible design, the second time domain resource includes M time units, and M is greater than or equal to 1. In this way, the sensing signal may not be sent in an adjacent time unit outside a first time domain resource occupied by the communication signal, so that impact of the sensing signal on the pilot signal can be reduced.

In a possible design, the sensing signal is a periodic signal; and the transmission resource that is not occupied by the sensing signal includes a third time domain resource whose length is N consecutive sensing signal periodicities and all frequency domain resources of the target transmission resource, the third time domain resource includes a first time domain resource occupied by the pilot signal, and N is greater than or equal to 1.

According to the foregoing method, when the sensing signal is a periodic signal, transmission of the sensing signal can be more conveniently controlled in a manner in which the sensing signal is not transmitted in one or more signal periodicities.

In a possible design, the first indication information includes time domain resource information of the transmission resource that is not occupied; and the time domain resource information includes a start time point and an end time point of a time domain resource in the transmission resource that is not occupied; or the time domain resource information includes a length of a time domain resource in the transmission resource that is not occupied and a start time point of the time domain resource; or the time domain resource information includes a length of a time domain resource in the transmission resource that is not occupied and an end time point of the time domain resource.

According to the foregoing method, a plurality of manners of flexibly notifying the second apparatus of the time domain resource information of the transmission resource that is not occupied by the sensing signal are provided. The second apparatus may accurately receive the sensing signal based on the transmission resource that is not occupied by the sensing signal in the target transmission resource.

In a possible design, the first apparatus may be a chip.

According to a second aspect, this application provides a communication method. The method may be applied to a second apparatus, a functional module in the second apparatus, a processor or a chip in the second apparatus, or the like. For example, the method is applied to the second apparatus. The method may include: The second apparatus receives a communication signal and a sensing signal that are sent by a first apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal. The second device performs communication processing based on the communication signal, and performs target sensing based on the sensing signal.

According to the foregoing method, the first apparatus does not send the sensing signal on the transmission resource used to transmit the pilot signal, to avoid impact of the sensing signal on the pilot signal in the communication signal. After receiving a pilot signal with which no sensing signal is superposed, the second apparatus may accurately perform channel estimation based on the pilot signal.

In a possible design, the second apparatus receives first indication information sent by the first apparatus. The first indication information indicates a transmission resource that is not occupied by the sensing signal in the target transmission resource. The second apparatus obtains the sensing signal based on the first indication information, to perform target sensing.

According to the foregoing method, the first apparatus notifies, by using the first indication information, the second apparatus of the transmission resource that is not occupied by the sensing signal in the target transmission resource, and the second apparatus may accurately receive the sensing signal based on the transmission resource that is not occupied by the sensing signal in the target transmission resource.

In a possible design, the transmission resource that is not occupied by the sensing signal includes a first time domain resource occupied by the pilot signal and a frequency domain resource on which the pilot signal is located.

According to the foregoing method, the sensing signal is not sent on a transmission resource block corresponding to the first time domain resource occupied by the pilot signal in the communication signal and the frequency domain resource occupied by the pilot signal, and a transmission resource block in the target transmission resource other than the transmission resource block corresponding to the first time domain resource occupied by the pilot signal and the frequency domain resource occupied by the pilot signal may be used to send the sensing signal. Therefore, the sensing signal is sent on as many transmission resources as possible while it is ensured that the sensing signal does not affect the pilot signal, to improve sensing performance of the second apparatus.

In a possible design, the transmission resource that is not occupied by the sensing signal includes a first time domain resource occupied by the pilot signal and all frequency domain resources of the target transmission resource.

According to the foregoing method, in a time range corresponding to the first time domain resource, the sensing signal is not sent on all the frequency domain resources of the target transmission resource, so that transmission of the sensing signal can be more conveniently controlled based on the transmission resource that is not occupied by the sensing signal.

In a possible design, the transmission resource that is not occupied by the sensing signal includes a first time domain resource occupied by the pilot signal, a second time domain resource adjacent to the first time domain resource, and all frequency domain resources of the target transmission resource.

According to the foregoing method, when duration corresponding to the first time domain resource occupied by the pilot signal is short, the sensing signal is not sent in a time range corresponding to the first time domain resource and the second time domain resource adjacent to the first time domain resource, so that time control can be better performed, and transmission of the sensing signal can be more conveniently controlled.

In a possible design, the second time domain resource includes M time units, and M is greater than or equal to 1. In this way, the sensing signal may not be sent in an adjacent time unit outside a first time domain resource occupied by the communication signal, so that impact of the sensing signal on the pilot signal can be reduced.

In a possible design, the sensing signal is a periodic signal; and the transmission resource that is not occupied by the sensing signal includes a third time domain resource whose length is N consecutive sensing signal periodicities and all frequency domain resources of the target transmission resource, the third time domain resource includes a first time domain resource occupied by the pilot signal, and N is greater than or equal to 1.

According to the foregoing method, when the sensing signal is a periodic signal, transmission of the sensing signal can be more conveniently controlled in a manner in which the sensing signal is not transmitted in one or more signal periodicities.

In a possible design, the first indication information includes time domain resource information of the transmission resource that is not occupied; and the time domain resource information includes a start time point and an end time point of a time domain resource in the transmission resource that is not occupied; or the time domain resource information includes a length of a time domain resource in the transmission resource that is not occupied and a start time point of the time domain resource; or the time domain resource information includes a length of a time domain resource in the transmission resource that is not occupied and an end time point of the time domain resource.

According to the foregoing method, a plurality of manners of flexibly notifying the second apparatus of the time domain resource information of the transmission resource that is not occupied by the sensing signal are provided. The second apparatus may accurately receive the sensing signal based on the transmission resource that is not occupied by the sensing signal in the target transmission resource.

In a possible design, the second apparatus may be a chip.

According to a third aspect, this application provides a communication method. The method may be applied to a first apparatus, a functional module in the first apparatus, a processor or a chip in the first apparatus, or the like. For example, the method is applied to the first apparatus. The method may include: A first apparatus generates a first communication signal and a sensing signal. The first apparatus sends the first communication signal and the sensing signal to a second apparatus on a target transmission resource. A first signal obtained after a pilot signal in the first communication signal and the sensing signal are superposed has a constant modulus characteristic.

According to the foregoing method, in a process in which the first apparatus sends the first communication signal and the sensing signal to the second apparatus on the target transmission resource in a hybrid manner, the first signal obtained after the first communication signal and the sensing signal are superposed still has the constant modulus characteristic. **In** this way, the second apparatus can accurately perform channel estimation based on the pilot signal in the received first communication signal.

In a possible design, the first apparatus adjusts a pilot signal in a to-be-sent second communication signal based on the sensing signal, to obtain the first communication signal.

According to the foregoing method, the first apparatus adjusts the to-be-sent second communication signal to the first communication signal. After the first apparatus sends the first communication signal and the sensing signal to the second apparatus on a same resource, the pilot signal that is received by the second apparatus and with which the sensing signal is superposed still has the constant modulus characteristic. The second apparatus may perform accurate channel estimation based on the received pilot signal.

In a possible design, the first signal is the same as the pilot signal in the second communication signal.

According to the foregoing method, because the pilot signal in the second communication signal is a reference signal that is pre-agreed on by the first apparatus and the second apparatus and that is used for channel estimation, the first signal obtained after the first communication signal and the sensing signal are superposed is the same as the pilot signal that is in the second communication signal and that exists before adjustment. In this way, the second apparatus may accurately perform channel estimation based on a pre-agreed pilot signal.

In a possible design, the first apparatus sends second indication information to the second apparatus. The second indication information indicates an adjustment manner of adjusting the pilot signal in the to-be-sent second communication signal.

According to the foregoing method, after receiving the second indication information, the second apparatus may accurately perform channel estimation based on the adjustment manner that is of adjusting the pilot signal in the to-be-sent second communication signal and that is indicated by the second indication information.

In a possible design, the first apparatus may be a chip.

According to a fourth aspect, this application provides a communication method. The method may be applied to a second apparatus, a functional module in the second apparatus, a processor or a chip in the second apparatus, or the like. For example, the method is applied to the second apparatus. The method may include: The second apparatus receives a first communication signal and a sensing signal that are sent by a first apparatus on a target transmission resource. A first signal obtained after a pilot signal in the first communication signal and the sensing signal are superposed has a constant modulus characteristic. The second apparatus performs communication processing based on the communication signal, and performs target sensing based on the sensing signal.

According to the foregoing method, in a process in which the first apparatus sends the first communication signal and the sensing signal to the second apparatus on the target transmission resource in a hybrid manner, the first signal obtained after the first communication signal and the sensing signal are superposed still has the constant modulus characteristic. In this way, the second apparatus can accurately perform channel estimation based on the pilot signal in the received first communication signal.

In a possible design, the first communication signal is obtained by the first apparatus by adjusting a pilot signal in a to-be-sent second communication signal based on the sensing signal.

According to the foregoing method, the first apparatus adjusts the to-be-sent second communication signal to the first communication signal. After the first apparatus sends the first communication signal and the sensing signal to the second apparatus on a same resource, the pilot signal that is received by the second apparatus and with which the sensing signal is superposed still has the constant modulus characteristic. The second apparatus may perform accurate channel estimation based on the received pilot signal.

In a possible design, the first signal is the same as the pilot signal in the second communication signal.

According to the foregoing method, because the pilot signal in the second communication signal is a reference signal that is pre-agreed on by the first apparatus and the second apparatus and that is used for channel estimation, the first signal obtained after the first communication signal and the sensing signal are superposed is the same as the pilot signal that is in the second communication signal and that exists before adjustment. **In** this way, the second apparatus may accurately perform channel estimation based on a pre-agreed pilot signal.

In a possible design, the second apparatus receives second indication information sent by the first apparatus. The second indication information indicates an adjustment manner of adjusting the pilot signal in the to-be-sent second communication signal. The second apparatus performs channel estimation based on the second indication information and the first signal.

According to the foregoing method, after receiving the second indication information, the second apparatus may accurately perform channel estimation based on the adjustment manner that is of adjusting the pilot signal in the to-be-sent second communication signal and that is indicated by the second indication information.

In a possible design, the second apparatus may be a chip.

According to a fifth aspect, this application provides a communication apparatus. The communication apparatus may be a first apparatus, a processor, a chip, or a functional module in the first apparatus, or the like. The communication apparatus has a function of implementing the first apparatus in the first aspect or the possible design examples of the first aspect, or the communication apparatus has a function of implementing the first apparatus in the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus includes a processing unit and a transceiver unit. The processing unit is configured to generate a communication signal and a sensing signal. The transceiver unit is configured to send the communication signal and the sensing signal to a second apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal. Alternatively, the processing unit is configured to generate a communication signal and a sensing signal. The transceiver unit is configured to send a first communication signal and the sensing signal to a second apparatus on a target transmission resource. A first signal obtained after a pilot signal in the first communication signal and the sensing signal are superposed has a constant modulus characteristic.

In addition, these units may further perform a corresponding function of the first apparatus in the possible design examples of the first aspect, or these units may perform a corresponding function of the first apparatus in the possible design examples of the third aspect. For details, refer to detailed descriptions in the method examples. Details are not described herein again.

According to a sixth aspect, this application provides a communication apparatus. A structure of the communication apparatus includes a processor, and optionally, further includes a memory and/or a communication interface. The communication interface is configured to receive or send information, a signal, or data, and is configured to perform communication interaction with another device in a communication system. The processor is configured to support the communication apparatus to perform a corresponding function of the first apparatus in the first aspect or the possible design examples of the first aspect; or the processor is configured to support the communication apparatus to perform a corresponding function of the first apparatus in the third aspect or the possible design examples of the third aspect. The memory is coupled to the processor, and the memory stores computer instructions, a logic circuit, or data that is necessary for the communication apparatus.

According to a seventh aspect, this application further provides a communication apparatus. The communication apparatus may be a second apparatus, a processor, a chip, or a functional module in the second apparatus, or the like. The communication apparatus has a function of implementing the second apparatus in the second aspect or the possible design examples of the second aspect, or the communication apparatus has a function of implementing the second apparatus in the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The transceiver unit is configured to receive a communication signal and a sensing signal that are sent by a first apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal. The processing unit is configured to: perform communication processing based on the communication signal, and perform target sensing based on the sensing signal. Alternatively, the transceiver unit is configured to receive a first communication signal and a sensing signal that are sent by a first apparatus on a target transmission resource. A first signal obtained after a pilot signal in the first communication signal and the sensing signal are superposed has a constant modulus characteristic. The processing unit is configured to: perform communication processing based on the communication signal, and perform target sensing based on the sensing signal.

In addition, these units may further perform a corresponding function of the second apparatus in the possible design examples of the second aspect, or these units may perform a corresponding function of the second apparatus in the possible design examples of the fourth aspect. For details, refer to detailed descriptions in the method examples. Details are not described herein again.

According to an eighth aspect, this application provides a communication apparatus. A structure of the communication apparatus includes a processor, and optionally, further includes a memory and/or a communication interface. The communication interface is configured to receive or send information, a signal, or data, and is configured to perform communication interaction with another device in a communication system, and the processor is configured to support the communication apparatus to perform a corresponding function of the second apparatus in the second aspect or the possible design examples of the second aspect; or the processor is configured to support the communication apparatus to perform a corresponding function of the second apparatus in the fourth aspect or the possible design examples of the fourth aspect. The memory is coupled to the processor, and the memory stores computer instructions, a logic circuit, or data that is necessary for the communication apparatus.

According to a ninth aspect, an embodiment of this application provides a communication system. The communication system may include the first apparatus, the second apparatus, and the like mentioned above.

According to a tenth aspect, an embodiment of this application provides a computer-readable storage medium. The computer-readable storage medium stores program instructions, and when the program instructions run on a computer, the computer is enabled to perform the method in any one of the first aspect and the possible designs of the first aspect or any one of the second aspect and the possible designs of the second aspect, or the method in any one of the third aspect and the possible designs of the third aspect, or the method in any one of the fourth aspect and the possible designs of the fourth aspect in embodiments of this application.

According to an eleventh aspect, an embodiment of this application provides a computer program product, including computer program code or instructions. When the computer program code or the instructions run on a computer, the method in any one of the first aspect or the possible designs of the first aspect is performed, or the method in any one of the second aspect or the possible designs of the second aspect is performed, or the method in any one of the third aspect or the possible designs of the third aspect is performed, or the method in any one of the fourth aspect or the possible designs of the fourth aspect is performed.

According to a twelfth aspect, this application further provides a chip, including a processor. The processor is coupled to a memory, and is configured to read and execute program instructions stored in the memory, so that the chip implements the method in any one of the first aspect or the possible designs of the first aspect, or implements the method in any one of the second aspect or the possible designs of the second aspect, or implements the method in any one of the third aspect or the possible designs of the third aspect, or implements the method in any one of the fourth aspect or the possible designs of the fourth aspect.

For each of the fifth aspect to the twelfth aspect and technical effects that may be achieved in each aspect, refer to descriptions of technical effects that may be achieved in any one of the first aspect or the possible solutions of the first aspect, or any one of the second aspect or the possible solutions of the second aspect, or any one of the third aspect or the possible solutions of the third aspect, or any one of the fourth aspect or the possible solutions of the fourth aspect.

BRIEF DESCRIPTION OF DRAWINGS

FIG. 1 is a diagram of an architecture of a communication system to which an embodiment of this application is applicable;

FIG. 2 is a diagram of a scenario in which a terminal device communicates with a network device according to an embodiment of this application;

FIG. 3 is a diagram of an internet of vehicles scenario according to an embodiment of this application;

FIG. 4 is a flowchart of a communication method according to an embodiment of this application;

FIG. 5 is a diagram of a transmission structure of a communication signal according to an embodiment of this application;

FIG. 6 is a diagram of a resource allocation manner of a communication signal in a target transmission resource according to an embodiment of this application;

FIG. 7 is a diagram of a sensing signal according to an embodiment of this application;

FIG. 8 is a diagram of a sensing signal transmitted on a target transmission resource according to an embodiment of this application;

FIG. 9 is a diagram of a transmission resource that is not occupied by a sensing signal according to an embodiment of this application;

FIG. 10 is a diagram of a sensing signal according to an embodiment of this application;

FIG. 11 is a diagram of a transmission resource that is not occupied by a sensing signal according to an embodiment of this application;

FIG. 12 is a diagram of a sensing signal transmitted on a target transmission resource according to an embodiment of this application;

FIG. 13 is a diagram of a resource allocation manner of a communication signal in a target transmission resource according to an embodiment of this application;

FIG. 14 is a diagram of a sensing signal according to an embodiment of this application;

FIG. 15 is a diagram of a transmission resource that is not occupied by a sensing signal according to an embodiment of this application;

FIG. 16 is a diagram of a sensing signal according to an embodiment of this application;

FIG. 17 is a diagram of a transmission resource that is not occupied by a sensing signal according to an embodiment of this application;

FIG. 18 is a diagram of a sensing signal transmitted on a target transmission resource according to an embodiment of this application;

FIG. 19 is a flowchart of a communication method according to an embodiment of this application;

FIG. 20 is a diagram of a resource allocation manner of a communication signal in a target transmission resource and a sensing signal transmitted on the target transmission resource according to an embodiment of this application;

FIG. 21 is a diagram of a resource allocation manner of a communication signal in a target transmission resource and a sensing signal transmitted on the target transmission resource according to an embodiment of this application;

FIG. 22 is a diagram of a resource allocation manner of a communication signal in a target transmission resource and a sensing signal transmitted on the target transmission resource according to an embodiment of this application;

FIG. 23 is a diagram of a structure of a communication apparatus according to an embodiment of this application;

FIG. 24 is a diagram of a structure of another communication apparatus according to an embodiment of this application;

FIG. 25 is a diagram of a structure of a communication apparatus according to an embodiment of this application; and

FIG. 26 is a diagram of a structure of another communication apparatus according to an embodiment of this application.

DESCRIPTION OF EMBODIMENTS

The following further describes in detail this application with reference to accompanying drawings.

Embodiments of this application provide a communication method and apparatus, to reduce impact exerted on communication performance when a time-frequency resource is multiplexed for a communication signal and a sensing signal for hybrid transmission. The method and the apparatus in this application are based on a same technical concept. Because problem-resolving principles of the method and the apparatus are similar, mutual references may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

To describe the technical solutions in embodiments of this application more clearly, the following describes a communication method and apparatus provided in embodiments of this application in detail with reference to the accompanying drawings.

The technical solutions provided in this application may be applied to various communication systems, for example, may be applied to a 4th generation (4th generation, 4G) communication system, for example, a long term evolution (long term evolution, LTE) system, or may be applied to a 5th generation (5th generation, 5G) communication system, for example, a new radio (new radio, NR) system, or may be applied to various communication systems evolved after 5G, for example, a 6th generation (6th generation, 6G) communication system. This application may be further applied to various communication systems such as satellite communication.

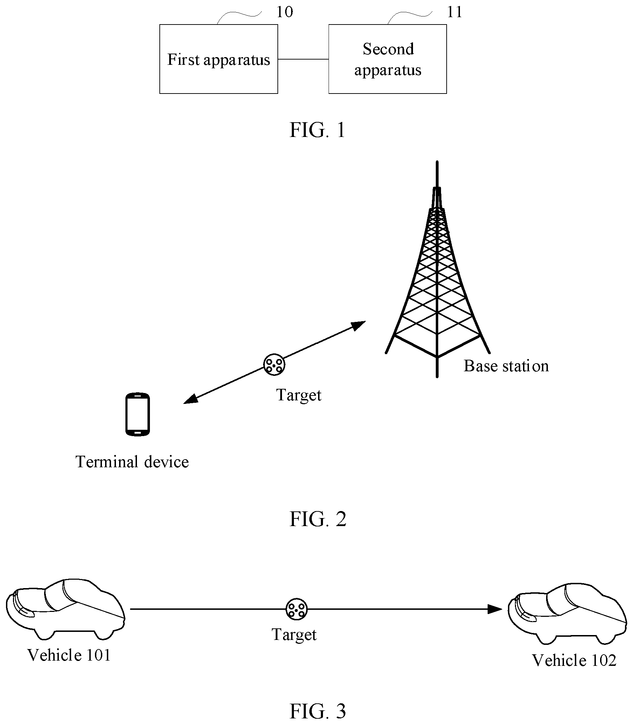

FIG. 1 shows an architecture of a communication system to which a communication method is applicable according to an embodiment of this application. The architecture of the communication system may include a first apparatus 10 and a second apparatus 11.

The first apparatus 10 or the second apparatus 11 may be any communication device having a wireless transceiver function, or may be a chip disposed in a communication device having a wireless transceiver function. The communication device includes but is not limited to a terminal device or a network device.

The network device includes but is not limited to a 5G base station (gNB), an evolved NodeB (evolved NodeB, eNB or eNodeB) in LTE, a home base station (for example, home evolved NodeB, or home NodeB, HNB), a baseband unit (baseband unit, BBU), an access point (access point, AP) in a wireless fidelity (wireless fidelity, Wi-Fi) system, a radio relay node, a radio backhaul node, a transmission and reception point (transmission and reception point, TRP) or a transmission point (transmission point, TP), a mobile switching center, a device that assumes a base station function in device-to-device (Device-to-Device, D2D), vehicle-to-everything (vehicle-to-everything, V2X), or machine-to-machine (machine-to-machine, M2M) communication, a device that assumes a base station function in uncrewed aerial vehicle communication, and the like; and may further include a central unit (central unit, CU) and a distributed unit (distributed unit, DU) in a cloud access network (cloud radio access network, C-RAN) system, and a network device in a non-terrestrial communication network (non-terrestrial network, NTN) communication system, that is, may be deployed on a high-altitude platform or a satellite. This is not limited in this embodiment of this application.

The terminal device may also be referred to as user equipment (user equipment, UE), an access terminal, a subscriber unit, a subscriber station, a mobile station, a remote station, a remote terminal, a mobile terminal, a user terminal, a terminal, a wireless communication device, a user agent, or a user apparatus. The terminal device in this embodiment of this application may be a mobile phone (mobile phone), a smartphone, a tablet computer (Pad), a computer with a wireless transceiver function, a vehicle-mounted communication apparatus, a communication device mounted on a high-altitude aircraft, a wearable device, an uncrewed aerial vehicle, a robot, a smart point of sale (point of sale, POS) machine, customer-premises equipment (customer-premises equipment, CPE), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a personal digital assistant (personal digital assistant, PDA), or the like. An application scenario is not limited in this embodiment of this application.

In this embodiment of this application, the first apparatus 10 sends a communication signal and a sensing signal to the second apparatus 11. The communication signal includes a pilot signal. After receiving the communication signal and the sensing signal, the second apparatus 11 performs channel estimation based on a pilot signal included in the communication signal, processes a communication service of the first apparatus 10 based on the received communication signal, and senses a target based on the received sensing signal.

The communication signal is a signal transmitted between the first apparatus and the second apparatus mainly to implement a wireless communication function. The sensing signal is a signal whose main function is to sense a surrounding environment to sense a target in the environment.

The communication system in this application may be applied to a scenario in which the terminal device communicates with the network device. As shown in FIG. 2, the first apparatus 10 in this embodiment of this application may be a terminal device, and the second apparatus 11 may be a network device. The terminal device sends a communication signal and a sensing signal to the network device on a same transmission resource. After receiving the communication signal and the sensing signal, the network device performs channel estimation based on a pilot signal included in the communication signal, processes a communication service of the terminal device based on the received communication signal, and senses a target in space based on the received sensing signal, so that the network device can detect related information of the target, for example, a location, a direction, a height, a speed, and a volume.

The communication system in this application may be further applied to a vehicle-to-everything (vehicle-to-everything, V2X) scenario. As shown in FIG. 3, the first apparatus 10 in this embodiment of this application may be any vehicle 101 in the internet of vehicles, and the second apparatus 11 may be any vehicle 102 in the internet of vehicles other than the vehicle 101. The vehicle 101 sends a communication signal and a sensing signal to the vehicle 102 on a same transmission resource. After receiving the communication signal and the sensing signal, the vehicle 102 performs channel estimation based on a pilot signal included in the communication signal, processes a communication service with the vehicle 101 based on the received communication signal, and senses a traveling environment of the vehicle based on the received sensing signal.

It should be noted that architectures of the communication systems shown in FIG. 1, FIG. 2, and FIG. 3 are merely used as examples, and FIG. 1, FIG. 2, and FIG. 3 do not limit composition of the architectures of the communication systems to which this application is applicable. More devices may be further included in FIG. 1, FIG. 2, and FIG. 3, and are not shown herein in this application.

Currently, the first apparatus simultaneously sends a communication signal and a sensing signal to the second apparatus on a same transmission resource, and performs hybrid transmission on the communication signal and the sensing signal on the same transmission resource. After receiving the communication signal, the second apparatus performs channel estimation based on a pilot signal in the communication signal. However, because a time-frequency resource is multiplexed for the communication signal and the sensing signal, the second apparatus receives the pilot signal with which the sensing signal is superposed, damaging a constant modulus characteristic of the pilot signal. Consequently, when the second apparatus performs pilot channel estimation, a signal-to-noise ratio fluctuates greatly, especially for a pilot signal with a small modulus value after superposition, the signal-to-noise ratio is small in a case of same background noise, and accuracy of channel estimation is affected.

Based on this, this application proposes a plurality of solutions for transmitting the communication signal and the sensing signal, so that when the time-frequency resource is multiplexed for the communication signal and the sensing signal for hybrid transmission, a receive end can accurately perform channel estimation based on a received pilot. The following separately describes the plurality of solutions for transmitting the communication signal and the sensing signal.

Solution 1: A sensing signal is sent on a transmission resource other than a transmission resource occupied by a pilot signal in a communication signal.

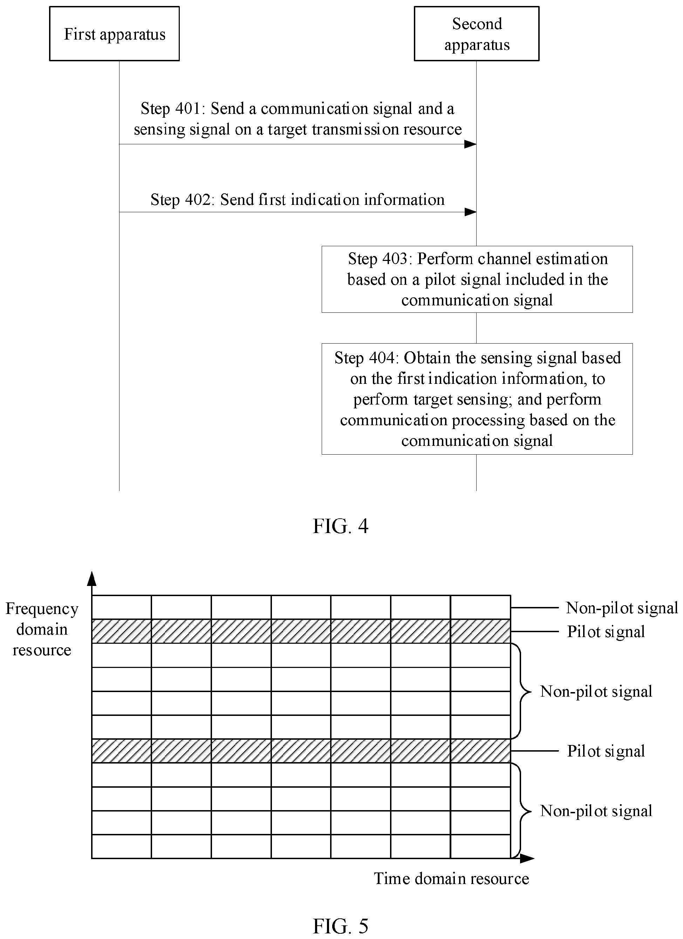

An embodiment of this application provides a communication method, which is applicable to the communication system shown in FIG. 1, FIG. 2, or FIG. 3. As shown in FIG. 4, a specific procedure of the method may include the following steps.

Step 401: A first apparatus sends a communication signal and a sensing signal to a second apparatus on a target transmission resource, and correspondingly, the second communication apparatus receives the communication signal and the sensing signal on the target transmission resource.

The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal.

In this embodiment of this application, the communication signal sent by the first apparatus to the second apparatus includes the pilot signal and the non-pilot signal other than the pilot signal. The pilot signal is a signal known by both the first apparatus and the second apparatus. The second apparatus performs, based on a received pilot signal and a pilot signal existing in the communication signal before sending, channel estimation on a channel for transmitting the communication signal and the sensing signal.

In this embodiment of this application, a part other than the pilot signal in the communication signal is referred to as a non-pilot signal, and the non-pilot signal may be used to transmit information such as data or signaling. In a transmission structure of the communication signal shown in FIG. 5, a transmission resource occupied by the pilot signal is at a location filled with a shadow, the non-pilot signal is transmitted at another location, and the non-pilot signal carries information such as data or signaling sent by the first apparatus to the second apparatus.

In this embodiment of this application, when sending the communication signal and the sensing signal to the second apparatus, the first apparatus simultaneously sends the communication signal and the sensing signal to the second apparatus on the target transmission resource. However, to prevent the sensing signal from affecting the pilot signal in the communication signal when a transmission resource is multiplexed for the communication signal and the sensing signal, in this embodiment of this application, the sensing signal is not transmitted on the resource occupied by the pilot signal. Before sending the communication signal and the sensing signal to the second apparatus, the first apparatus needs to first determine transmission resources occupied by the communication signal and the sensing signal.

In this embodiment of this application, the transmission resource occupied for transmitting the pilot signal is not multiplexed for the sensing signal, and the transmission resource occupied by the sensing signal partially or completely overlaps the transmission resource occupied by the non-pilot signal.

Based on the foregoing resource allocation manner, the first apparatus may continuously send the communication signal on the target transmission resource. For the sensing signal, the first apparatus sends the sensing signal on some or all resources in the target transmission resource other than the transmission resource occupied by the pilot signal. Therefore, in this embodiment of this application, a transmission resource that is not occupied by the sensing signal in the target transmission resource may be determined based on the transmission resource occupied by the pilot signal in the communication signal.

The transmission resource in this embodiment of this application includes a time domain resource and a frequency domain resource. The time domain resource includes one or more time units. One time unit may include one or more minimum granularities of time domain division. For example, one time unit includes one or more orthogonal frequency division multiplexing (Orthogonal Frequency Division Multiplexing, OFDM) symbols, or one time unit includes one or more orthogonal amplitude modulation (Quadrature Amplitude Modulation, QAM) symbols. The frequency domain resource includes a frequency domain unit. The frequency domain unit may include one or more minimum granularities of frequency domain division. For example, one frequency domain unit includes one or more subcarriers.

In an implementation, this embodiment of this application provides a plurality of resource allocation manners of the sensing signal.

Manner 1: A transmission resource block corresponding to a first time domain resource occupied by the pilot signal in the communication signal and a frequency domain resource occupied by the pilot signal in the communication signal is not multiplexed for the sensing signal.

The first time domain resource occupied by the pilot signal in the communication signal includes one or more time units, and the frequency domain resource occupied by the pilot signal in the communication signal includes one or more frequency domain units.

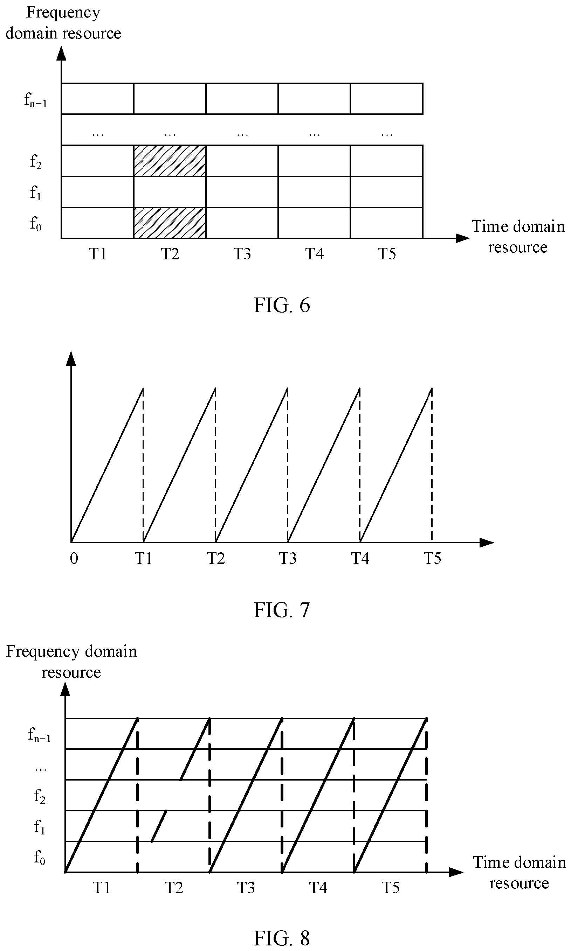

FIG. 6 shows a resource allocation manner of a communication signal in a target transmission resource. The transmission resource occupied by the pilot signal in the communication signal is at a location filled with a shadow, and the transmission resource occupied by the non-pilot signal is at another location. T1, T2, T3, T4, and T5 in a time domain direction each represent one time unit, and $f_0$, $f_1$, $f_2$, ..., and $f_{n-1}$ in a frequency domain direction each represent one frequency domain unit. The first time domain resource occupied by the pilot signal in the communication signal is the time unit T2, and frequency domain resources occupied by the pilot signal in the communication signal are $f_0$ and $f_2$. Based on the resource allocation manner, the sensing signal does not occupy the transmission resource occupied by the pilot signal in the communication signal. To be specific, the transmission resource that is not occupied by the sensing signal includes a transmission resource block corresponding to the time unit T2 and the frequency domain unit $f_0$, and a transmission resource block corresponding to the time unit T2 and the frequency domain unit $f_2$.

It is assumed that the sensing signal is a periodic signal shown in FIG. 7. Because the transmission resource that is not occupied by the sensing signal in the target transmission resource includes the transmission resource block corresponding to the time unit T2 and the frequency domain unit $f_0$ and the transmission resource block corresponding to the time unit T2 and the frequency domain unit $f_2$, the sensing signal transmitted on the target transmission resource is shown in FIG. 8. The sensing signal is not transmitted on the transmission resource block corresponding to the time unit T2 and the frequency domain unit $f_0$ and the transmission resource block corresponding to the time unit T2 and the frequency domain unit $f_2$.

In the resource allocation manner provided in this embodiment of this application, based on the transmission resource occupied by the pilot signal in the communication signal, the transmission resource occupied by the pilot signal may be used as a transmission resource that is not occupied by the sensing signal. In a process of sending the sensing signal, it needs to be precisely controlled that the sensing signal is not sent on the transmission resource occupied by the pilot signal. This manner may be applied to a sensing signal generated in a digital domain, and it can be precisely controlled that the sensing signal is not sent on the transmission resource occupied by the pilot signal.

Manner 2: A transmission resource block corresponding to a first time domain resource occupied by the pilot signal in the communication signal and all frequency domain resources of the target transmission resource is not multiplexed for the sensing signal.

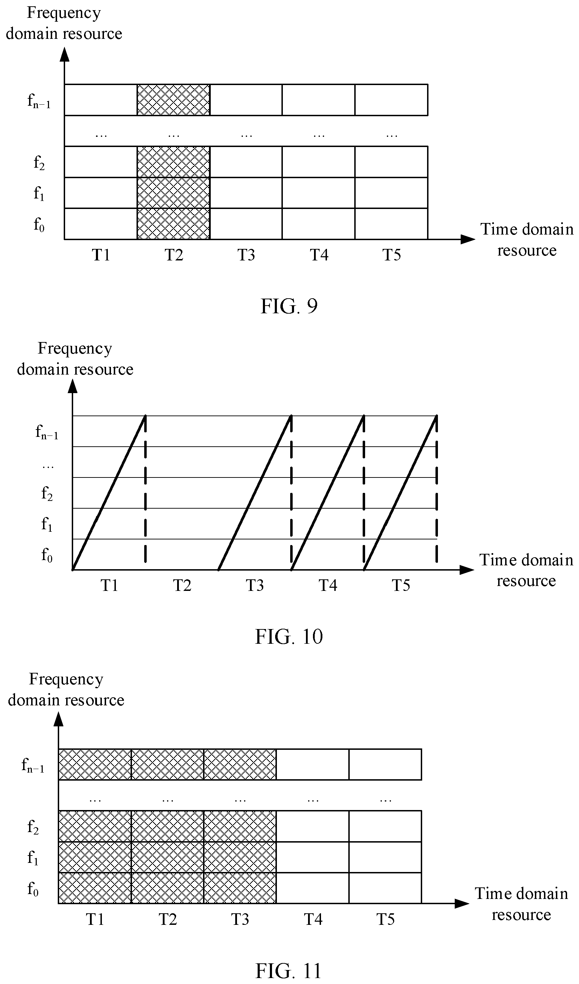

FIG. 6 shows a resource allocation manner of a communication signal in a target transmission resource. The transmission resource occupied by the pilot signal in the communication signal is at a location filled with a shadow, and the transmission resource occupied by the non-pilot signal is at another location. T1, T2, T3, T4, and T5 in a time domain direction each represent one time unit, and $f_0$, $f_1$, $f_2$, ..., and $f_{n-1}$ in a frequency domain direction each represent one frequency domain unit. The first time domain resource occupied by the pilot signal in the communication signal is the time unit T2, and frequency domain resources occupied by the pilot signal in the communication signal are $f_0$ and $f_2$. Based on the resource allocation manner, the sensing signal does not occupy a transmission resource block determined based on both the first time domain resource occupied by the pilot signal in the communication signal and all the frequency domain resources of the target transmission resource. To be specific, the transmission resource that is not occupied by the sensing signal includes a transmission resource block determined based on the time unit T2 and all the frequency domain units $f_0$, $f_1$, $f_2$, ..., and $f_{n-1}$. In FIG. 9, the transmission resource that is not occupied by the sensing signal is at a location filled with a shadow.

It is assumed that the sensing signal is a periodic signal shown in FIG. 7. Because the transmission resource that is not occupied by the sensing signal in the target transmission resource includes the transmission resource block determined based on the time unit T2 and all the frequency domain units $f_0$, $f_1$, $f_2$, ..., and $f_{n-1}$, the sensing signal transmitted in the target transmission resource is shown in FIG. 10, and the sensing signal is not transmitted on the transmission resource block determined based on the time unit T2 and all the frequency domain units $f_0$, $f_1$, $f_2$, ..., and $f_{n-1}$.

In the resource allocation manner provided in this embodiment of this application, the transmission resource that is not occupied by the sensing signal may be determined based on the first time domain resource occupied by the pilot signal in the communication signal and all the frequency domain resources of the target transmission resource. This manner may be applied to a scenario in which it cannot be accurately controlled that the sensing signal is not transmitted on a specific frequency domain unit (for example, a sensing signal generated by using an analog oscillator). The sensing signal is sent on none of the frequency domain resources of the target transmission resource within a time range corresponding to the first time domain resource. Therefore, transmission of the sensing signal can be controlled more conveniently based on the transmission resource that is not occupied by the sensing signal, and a requirement for signal processing and/or hardware is low.

Manner 3: A resource block corresponding to a first time domain resource occupied by the pilot signal in the communication signal, a second time domain resource adjacent to the first time domain resource, and all frequency domain resources of the target transmission resource is not multiplexed for the sensing signal.

FIG. 6 shows a resource allocation manner of a communication signal in a target transmission resource. The transmission resource occupied by the pilot signal in the communication signal is at a location filled with a shadow, and the transmission resource occupied by the non-pilot signal is at another location. T1, T2, T3, T4, and T5 in a time domain direction each represent one time unit, and $f_0$, $f_1$, $f_2$, ..., and $f_{n-1}$ in a frequency domain direction each represent one frequency domain unit. The first time domain resource occupied by the pilot signal in the communication signal is the time unit T2, and frequency domain resources occupied by the pilot signal in the communication signal are $f_0$ and $f_2$. Based on the resource allocation manner, the sensing signal does not occupy a transmission resource block jointly determined based on the first time domain resource occupied by the pilot signal in the communication signal, the second time domain resource adjacent to the first time domain resource, and all the frequency domain resources of the target transmission resource.

The second time domain resource adjacent to the first time domain resource includes M time units, and M is greater than or equal to 1.

When a value of M is 1, time domain resources in the transmission resource that is not occupied by the sensing signal include the first time domain resource occupied by the pilot signal in the communication signal, a time unit before the first time domain resource, and a time unit after the first time domain resource. As shown in FIG. 11, the time domain resources in the transmission resource that is not occupied by the sensing signal includes a time unit T2, a time unit T1, and a time unit T3 that are occupied by the pilot signal in the communication signal. The transmission resource that is not occupied by the sensing signal is a transmission resource block determined based on the time units T1, T2, and T3 and all the frequency domain units $f_0$, $f_1$, $f_2$, ..., and $f_{n-1}$. In FIG. 11, the transmission resource that is not occupied by the sensing signal is at a location filled with a shadow.

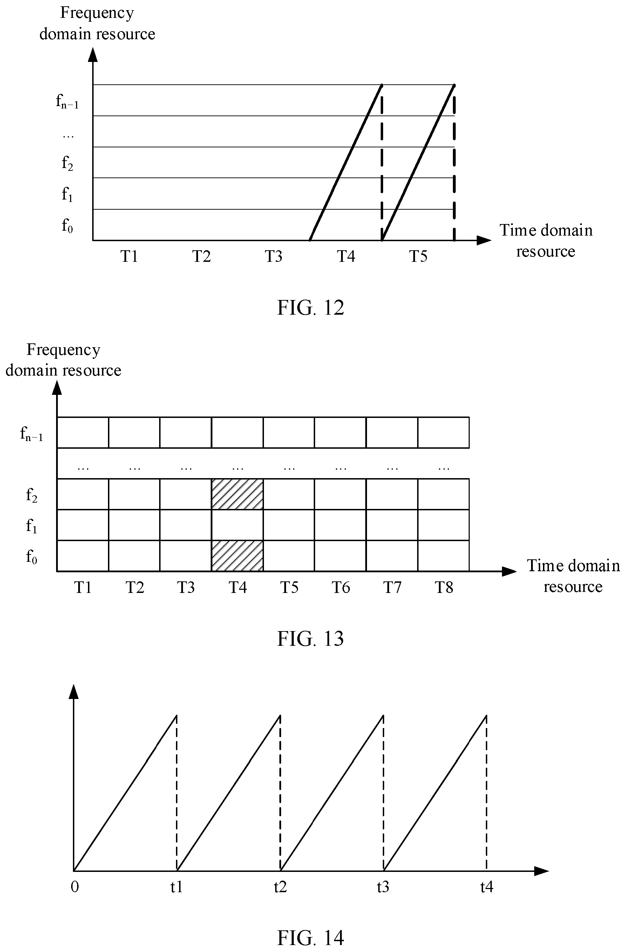

It is assumed that the sensing signal is a periodic signal shown in FIG. 7. Because the transmission resource that is not occupied by the sensing signal in the target transmission resource includes the transmission resource block determined based on the time units T1, T2, and T3 and all the frequency domain units $f_0$, $f_1$, $f_2$, ..., and $f_{n-1}$, the sensing signal transmitted on the target transmission resource is shown in FIG. 12, and the sensing signal is not transmitted on the transmission resource block determined based on the time units T1, T2, and T3 and all the frequency domain units $f_0$, $f_1$, $f_2$, ..., and $f_{n-1}$.

In the resource allocation manner provided in this embodiment of this application, the transmission resource that is not occupied by the sensing signal may be determined based on the first time domain resource occupied by the pilot signal in the communication signal, the second time domain resource adjacent to the first time domain resource, and all the frequency domain resources of the target transmission resource. To further reduce impact of the sensing signal on the pilot signal in the communication signal, and better control transmission of the sensing signal, the sensing signal may not be transmitted within specific duration before and after the first time domain resource occupied by the pilot signal in the communication signal. This manner may be applied to a scenario in which it cannot be accurately controlled that the sensing signal is not transmitted on a specific frequency domain unit (for example, a sensing signal generated by using an analog oscillator). The sensing signal is sent on none of the frequency domain resources of the target transmission resource within a time range corresponding to the first time domain resource and the second time domain resource adjacent to the first time domain resource. Therefore, transmission of the sensing signal can be controlled more conveniently based on the transmission resource that is not occupied by the sensing signal, and a requirement for signal processing and/or hardware is low.

Manner 4: The sensing signal does not occupy a transmission resource block corresponding to a third time domain resource and all frequency domain resources of the target transmission resource.

A length of the third time domain resource is N consecutive sensing signal periodicities, N is greater than or equal to 1, and the third time domain resource includes the first time domain resource occupied by the pilot signal in the communication signal.

In this manner, the sensing signal in this embodiment of this application is a periodic signal. To better control transmission of the sensing signal, the sensing signal may not be transmitted in one or more sensing signal periodicities.

In an optional implementation, when the third time domain resource is determined, one or more sensing signal periodicities including the first time domain resource occupied by the pilot signal in the communication signal may be used as the third time domain resource.

FIG. 13 shows a resource allocation manner of a communication signal in a target transmission resource. The transmission resource occupied by the pilot signal in the communication signal is at a location filled with a shadow, and the transmission resource occupied by the non-pilot signal is at another location. T1, T2, T3, T4, T5, T6, T7, and T8 in a time domain direction each represent one time unit, and $f_0$, $f_1$, $f_2$, ..., and $f_{n-1}$ in a frequency domain direction each represent one frequency domain unit. The first time domain resource occupied by the pilot signal in the communication signal is the time unit T4, and frequency domain resources occupied by the pilot signal in the communication signal are $f_0$ and $f_2$. Based on the resource allocation manner, the transmission resource that is not occupied by the sensing signal includes a transmission resource block determined based on both the third time domain resource and all the frequency domain resources of the target transmission resource.

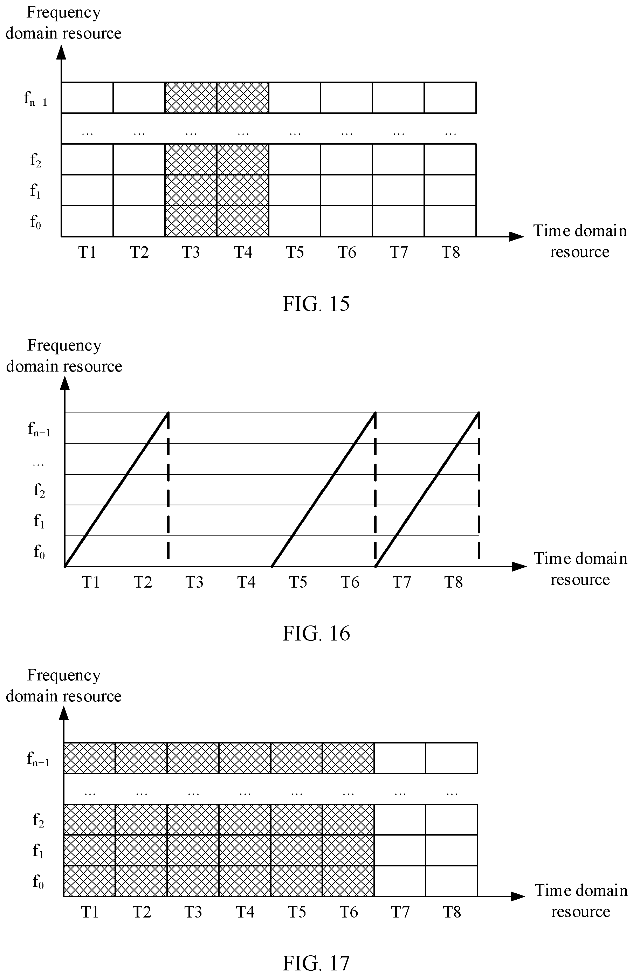

If the sensing signal is a periodic signal shown in FIG. 14, one periodicity of the sensing signal is two time units, a sensing signal periodicity t2 includes the first time domain resource occupied by the pilot signal in the communication signal, and the sensing signal periodicity t2 corresponds to the time unit T3 and the time unit T4, the third time domain resource includes the time unit T3 and the time unit T4, and the transmission resource that is not occupied by the sensing signal is a transmission resource jointly determined based on the time unit T3, the time unit T4, and all the frequency domain units $f_0$, $f_1$, $f_2$, ..., and $f_{n-1}$. As shown in FIG. 15, the transmission resource that is not occupied by the sensing signal is at a location filled with a shadow.

The sensing signal transmitted on the target transmission resource is shown in FIG. 16. The sensing signal is not transmitted on a transmission resource block jointly determined based on the time unit T3, the time unit T4, and all the frequency domain units $f_0$, $f_1$, $f_2$, ..., and $f_{n-1}$.

In another optional implementation, when the third time domain resource is determined, a plurality of consecutive sensing signal periodicities may be used as the third time domain resource, and the plurality of consecutive sensing signal periodicities include the first time domain resource occupied by the pilot signal in the communication signal. For example, one sensing signal periodicity including the first time domain resource occupied by the pilot signal, one periodicity before the sensing signal periodicity including the first time domain resource occupied by the pilot signal, and one periodicity after the sensing signal periodicity including the first time domain resource occupied by the pilot signal are used as the third time domain resource.

FIG. 13 shows a resource allocation manner of a communication signal in a target transmission resource. The transmission resource occupied by the pilot signal in the communication signal is at a location filled with a shadow, and the transmission resource occupied by the non-pilot signal is at another location. T1, T2, T3, T4, T5, T6, T7, and T8 in a time domain direction each represent one time unit, and $f_0$, $f_1$, $f_2$, ..., and $f_{n-1}$ in a frequency domain direction each represent one frequency domain unit. The first time domain resource occupied by the pilot signal in the communication signal is the time unit T4, and frequency domain resources occupied by the pilot signal in the communication signal are $f_0$ and $f_2$. Based on the resource allocation manner, the transmission resource that is not occupied by the sensing signal includes a transmission resource block determined based on both the third time domain resource and all the frequency domain resources of the target transmission resource. For example, one sensing signal periodicity including the first time domain resource occupied by the pilot signal, one periodicity before the sensing signal periodicity including the first time domain resource occupied by the pilot signal, and one periodicity after the sensing signal periodicity including the first time domain resource occupied by the pilot signal are used as the third time domain resource.

If the sensing signal is a periodic signal shown in FIG. 14, one periodicity of the sensing signal is two time units, a sensing signal periodicity t2 includes the first time domain resource occupied by the pilot signal in the communication signal, the sensing signal periodicity t2 corresponds to the time unit T3 and the time unit T4, a sensing signal periodicity t1 before the sensing signal periodicity t2 corresponds to the time unit T1 and the time unit T2, and a sensing signal periodicity t3 after the sensing signal periodicity t2 corresponds to the time unit T5 and the time unit T6, it is determined that the third time domain resource includes the time units T1, T2, T3, T4, T5, and T6. The transmission resource that is not occupied by the sensing signal includes the transmission resource block determined based on both the time units T1, T2, T3, T4, T5, and T6 and all the frequency domain units $f_0$, $f_1$, $f_2$, ..., and $f_{n-1}$. As shown in FIG. 17, the transmission resource that is not occupied by the sensing signal is at a location filled in a shadow.

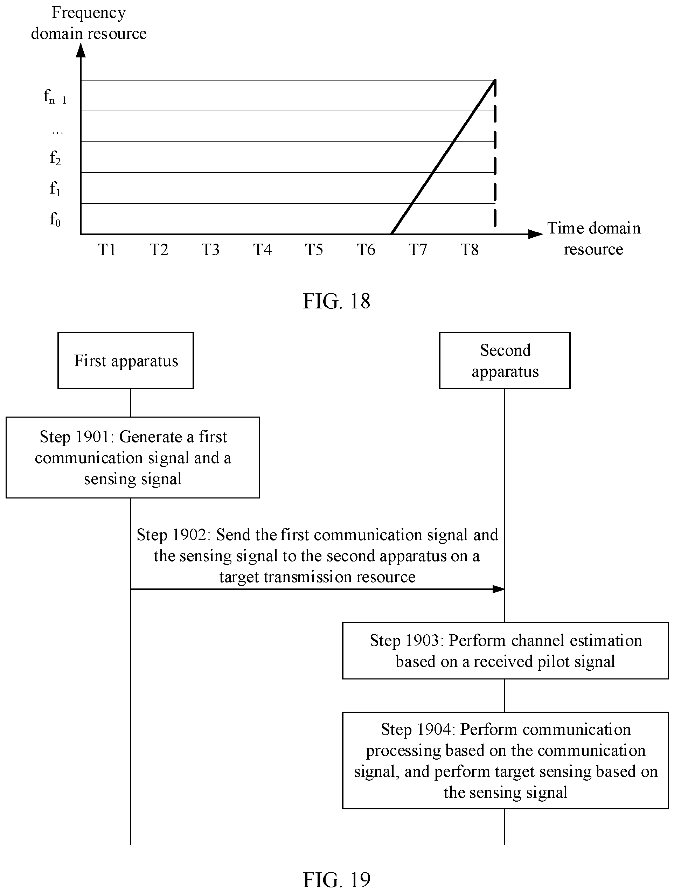

The sensing signal transmitted on the target transmission resource is shown in FIG. 18. The sensing signal is not transmitted on the transmission resource block determined based on both the time units T1, T2, T3, T4, T5, and T6 and all the frequency domain units $f_0$, $f_1$, $f_2$, ..., and $f_{n-1}$.

In this embodiment of this application, after the transmission resource of the sensing signal is determined in any one of the plurality of resource allocation manners of the sensing signal, the sensing signal is sent to the second apparatus on the determined transmission resource of the sensing signal, and the communication signal is sent to the second apparatus on the target transmission resource.

Step 402: The first apparatus sends first indication information to the second apparatus.

The first indication information indicates a transmission resource that is not occupied by the sensing signal in the target transmission resource.

In this embodiment of this application, after the transmission resource of the sensing signal is determined, because the sensing signal does not occupy the transmission resource occupied by the pilot signal in the target transmission resource, to enable the second apparatus to accurately receive the sensing signal, the first apparatus may notify, by using the first indication information, the second apparatus of the transmission resource that is not occupied by the sensing signal in the target transmission resource. When receiving the sensing signal, the second apparatus receives, based on the transmission resource that is not occupied by the sensing signal in the target transmission resource, the sensing signal on a resource other than the transmission resource that is not occupied in the target transmission resource.

Because transmission resources occupied by the pilot signal in the communication signal are less than transmission resources occupied by the non-pilot signal, the transmission resource that is not occupied by the sensing signal in the target transmission resource and that is indicated by the first apparatus to the second apparatus is essentially the transmission resource occupied by the pilot signal in the communication signal. Because the pilot signal occupies less transmission resources, a manner in which the first apparatus indicates, to the second apparatus, the transmission resource that is not occupied by the sensing signal in the target transmission resource can reduce signaling overheads.

Alternatively, in this embodiment of this application, the first indication information sent by the first apparatus to the second apparatus may further indicate the transmission resource occupied by the sensing signal in the target transmission resource. The second apparatus may directly receive the sensing signal based on the transmission resource that is occupied by the sensing signal in the target transmission resource and that is indicated in the first indication information.

In this embodiment of this application, when the first apparatus indicates, to the second apparatus, the transmission resource that is not occupied by the sensing signal in the target transmission resource, in an optional implementation, both a time domain resource and a frequency domain resource in the transmission resource that is not occupied by the sensing signal are indicated to the second apparatus.

For example, in a case of the transmission resource that is not occupied by the sensing signal shown in FIG. 11, the time domain resource that is in the transmission resource that is not occupied and that is carried in the first indication information sent by the first apparatus to the second apparatus includes the time units T1, T2, and T3, and a frequency domain resource in the transmission resource that is not occupied includes all the frequency domain resources of the target transmission resource.

Based on the plurality of resource allocation manners of the sensing signal, the determined time domain resource in the transmission resource that is not occupied by the sensing signal may include a plurality of time units. When the time domain resource in the transmission resource that is not occupied by the sensing signal includes a plurality of time units, the first indication information sent by the first apparatus to the second apparatus may include time domain resource information of the transmission resource that is not occupied.

In an implementation, the time domain resource information carried in the first indication information may be represented in the following representation manners:

1. The time domain resource information includes a start time point and an end time point of the time domain resource in the transmission resource that is not occupied by the sensing signal.

For example, in a case of the transmission resource that is not occupied by the sensing signal shown in FIG. 17, the start time point of the time domain resource in the transmission resource that is not occupied is the time unit T1, and the end time point of the time domain resource in the transmission resource that is not occupied is the time unit T6. In this case, time domain resource information that is of the transmission resource that is not occupied and that is included in the first indication information sent by the first apparatus to the second apparatus is the start time point, namely, the time unit T1 and the end time point, namely, the time unit T6.

2. The time domain resource information includes a length of the time domain resource in the transmission resource that is not occupied by the sensing signal and a start time point of the time domain resource.

For example, in a case of the transmission resource that is not occupied by the sensing signal shown in FIG. 17, the start time point of the time domain resource in the transmission resource that is not occupied is the time unit T1, and the length of the time domain resource in the transmission resource that is not occupied is six time units. In this case, time domain resource information that is of the transmission resource that is not occupied and that is included in the first indication information sent by the first apparatus to the second apparatus is the start time point, namely, the time unit T1 and the length of the time domain resource in the transmission resource that is not occupied, namely, six time units.

3. The time domain resource information includes a length of the time domain resource in the transmission resource that is not occupied by the sensing signal and an end time point of the time domain resource.

For example, in a case of the transmission resource that is not occupied by the sensing signal shown in FIG. 17, the end time point of the time domain resource in the transmission resource that is not occupied is the time unit T6, and the length of the time domain resource in the transmission resource that is not occupied is six time units. In this case, time domain resource information that is of the transmission resource that is not occupied and that is included in the first indication information sent by the first apparatus to the second apparatus is the end time point, namely, the time unit T6 and the length of the time domain resource in the transmission resource that is not occupied, namely, six time units.

In some possible implementations, the first apparatus is a network device, and the second apparatus is a terminal device. In this case, the first apparatus may send the first indication information to the second apparatus by using a plurality of manners such as downlink control information (Downlink Control Information, DCI), radio resource control (Radio Resource Control, RRC) signaling, or a medium access control (Medium Access Control, MAC) control unit (Control Element, CE).

If the first apparatus is a terminal device, and the second apparatus is a network device, the first apparatus may send the first indication information to the second apparatus by using a manner such as uplink control information (Up Control Information, UCI).

If both the first apparatus and the second apparatus are terminal devices, the first apparatus may send the first indication information to the second apparatus through a serial communication interface (Serial Communication Interface, SCI).

A sequence of performing step 401 and step 402 is not limited in this embodiment of this application. After determining the transmission resource that is not occupied by the sensing signal, the first apparatus may perform step 401 before step 402, or perform step 402 before step 401, or simultaneously perform step 401 and step 402.

Step 403: The second apparatus performs channel estimation based on the pilot signal included in the communication signal.

The pilot signal in the communication signal is a reference signal known by the first apparatus and the second apparatus, and the pilot signal in the communication signal and transmitted valid data are received by the second apparatus through channel transmission. The second apparatus may estimate a transmission channel characteristic based on a change of the known pilot signal, to restore the valid data in the communication signal transmitted by the first apparatus.

Step 404: The second apparatus obtains the sensing signal based on the first indication information, to perform target sensing; and performs communication processing based on the communication signal.

It should be noted that in this embodiment of this application, a sequence of step 403 and step 404 is not limited, and step 403 and step 404 may alternatively be performed concurrently.

In this embodiment of this application, after receiving the first indication information, the second apparatus may learn of the transmission resource that is not occupied by the first apparatus to transmit the sensing signal. When receiving the sensing signal, the second apparatus may obtain the sensing signal on a transmission resource in the target transmission resource other than the transmission resource that is not occupied by the sensing signal and that is indicated by the first indication information, and sense a target based on the obtained sensing signal.

In addition, the second apparatus obtains the communication signal on the target transmission resource, and the second apparatus performs communication processing based on the obtained communication signal. In an implementation, the communication processing performed by the second apparatus may be a communication service between the first apparatus and the second apparatus. For example, when the first apparatus is a terminal device, and the second apparatus is a network device, the communication signal may be an access request initiated by the first apparatus. In this case, after receiving the communication signal, the second apparatus may process the access request initiated by the first apparatus.

Solution 2: When hybrid transmission of a communication signal and a sensing signal is performed, a signal obtained after a pilot signal in the communication signal and the sensing signal are superposed has a constant modulus characteristic.

An embodiment of this application provides a communication method, which is applicable to the communication system shown in FIG. 1, FIG. 2, or FIG. 3. As shown in FIG. 19, a specific procedure of the method may include the following steps.

Step 1901: A first apparatus generates a first communication signal and a sensing signal, where a first signal obtained after a pilot signal in the first communication signal and the sensing signal are superposed has a constant modulus characteristic.

In this embodiment of this application, the constant modulus characteristic of the first signal is that a modulus value corresponding to the first signal is a constant value, or the modulus value corresponding to the first signal falls within a preset range.

In an optional implementation, after obtaining a to-be-sent second communication signal, the first apparatus adjusts a pilot signal in the second communication signal, to obtain the first communication signal.

Because the first apparatus needs to transmit the communication signal and the sensing signal to a second apparatus on a same transmission resource, the second apparatus receives a signal obtained after the sensing signal and the communication signal are superposed. If the first apparatus directly sends the to-be-sent second communication signal and the sensing signal to the second apparatus, when the second apparatus performs channel estimation based on the pilot signal, a signal obtained after the second communication signal and the sensing signal are superposed is used. Because a pilot signal received by the second apparatus is superposed with the sensing signal, a constant modulus characteristic of the pilot signal in the second communication signal may be damaged, and consequently, the second apparatus cannot accurately perform channel estimation. However, in this embodiment of this application, before the first apparatus sends the to-be-sent second communication signal to the second apparatus, the first apparatus adjusts the to-be-sent second communication signal, to obtain the first communication signal, and the first communication signal needs to meet the following condition: The first signal obtained after the pilot signal that is in the first communication signal and that is obtained after adjustment is superposed with the sensing signal has the constant modulus characteristic. Therefore, based on this embodiment of this application, before sending the second communication signal, the first apparatus adjusts the second communication signal to the first communication signal. In this way, after the first apparatus sends the first communication signal and the sensing signal to the second apparatus on a same resource, the pilot signal that is received by the second apparatus and with which the sensing signal is superposed still has the constant modulus characteristic. The second apparatus may perform accurate channel estimation based on the received pilot signal.

In this embodiment of this application, the to-be-sent second communication signal may be adjusted in a plurality of different manners. An adjustment manner of the second communication signal is not limited in this embodiment of this application, provided that an adjustment manner in which the first signal obtained after the pilot signal that is in the first communication signal and that is obtained after adjustment is superposed with the sensing signal has the constant modulus characteristic is applicable to this application.

In an optional implementation, the first signal obtained after the pilot signal that is in the first communication signal and that is obtained after adjustment is superposed with the sensing signal is the same as the pilot signal in the second communication signal.

Because the pilot signal in the second communication signal is a reference signal agreed on by both the first apparatus and the second apparatus, the second apparatus may accurately perform channel estimation based on the pilot signal in the second communication signal, and the pilot signal in the second communication signal also has a very good constant modulus characteristic. Therefore, after the first apparatus adjusts the to-be-sent second communication signal to obtain the first communication signal, in a process in which the first apparatus sends the first communication signal and the sensing signal, the pilot signal in the first communication signal and the sensing signal are superposed, and the pilot signal received by the second apparatus is the first signal obtained after the pilot signal in the first communication signal and the sensing signal are superposed. Because the first signal is the same as the pilot signal in the second communication signal, the second apparatus may perform accurate channel estimation based on the obtained pilot signal.

For example, the to-be-sent second communication signal is s1, and the sensing signal is s2. When the first apparatus sends the second communication signal and the sensing signal on a same transmission resource, a power coefficient allocated to the second communication signal is $\sqrt{\alpha}$, and a power coefficient allocated to the sensing signal is $\sqrt{1-\alpha}$. In this case, after the second communication signal and the sensing signal are superposed, a signal received by the second apparatus is $s=\sqrt{\alpha}*s1+\sqrt{1-\alpha}*s2$.

Before sending the second communication signal, the first apparatus adjusts the second communication signal to the first communication signal s3, where $s3=s1-\sqrt{1-\alpha}*s2$; and sends the first communication signal and the sensing signal on the same transmission resource. A signal received by the second apparatus is

$$s = s1 - \sqrt{1-\alpha}*s2 + \sqrt{1-\alpha}*s2 = s1$$

Step 1902: The first apparatus sends the first communication signal and the sensing signal to the second apparatus on a target transmission resource.

The target transmission resource includes a time domain resource and a frequency domain resource. The first apparatus sends the first communication signal and the sensing signal on a same time domain resource and a same frequency domain resource. A transmission resource occupied by the first communication signal is the same as a transmission resource occupied by the sensing signal.

Step 1903: The second apparatus performs channel estimation based on the received pilot signal.

For a manner in which the second apparatus performs channel estimation in step 1903 in this embodiment of this application, refer to the foregoing descriptions in step 403. Details are not described herein again.

Step 1904: The second apparatus performs communication processing based on the communication signal, and performs target sensing based on the sensing signal.

For a manner in which the second apparatus performs communication processing and target sensing, refer to the foregoing descriptions in step 404. Details are not described herein again.

In addition, if the first signal obtained after the pilot signal in the first communication signal obtained after adjustment and the sensing signal are superposed in this embodiment of this application is different from the pilot signal in the second communication signal, the first apparatus further needs to send second indication information to the second apparatus. The second indication information indicates an adjustment manner of adjusting the pilot signal in the to-be-sent second communication signal.

The second indication information may be an offset value corresponding to an initialization seed expression used for generating the pilot signal. An initialization seed used for generating the pilot signal is an initialization value of a register when the pilot signal is generated, and the initialization seed expression is an expression including the initialization value of the register when the pilot signal is generated. Because the pilot signal in the second communication signal is a reference signal agreed on by the first apparatus and the second apparatus, the initialization seed expression used for generating the pilot signal is also agreed on by the first apparatus and the second apparatus in advance. After adjusting the pilot signal, the first apparatus needs to notify the second apparatus of the offset value corresponding to the initialization seed expression, and the second apparatus determines the adjusted pilot signal based on the received offset value corresponding to the initialization seed expression.

Alternatively, the second indication information may be identification information of an initialization seed expression used for generating the pilot signal. An initialization seed used for generating the pilot signal is an initialization value of a register when the pilot signal is generated, and the initialization seed expression is an expression including the initialization value of the register when the pilot signal is generated. For example, the second indication information may be a sequence number of the initialization seed expression used for generating the pilot signal. The first apparatus may generate the pilot signal based on one of a plurality of initialization seed expressions. All initialization seed expressions correspond to different identification information, and the initialization seed expression used for generating the pilot signal is pre-agreed on by the second apparatus. If the first apparatus adjusts the pilot signal in the to-be-sent second communication signal, the first apparatus needs to notify the second apparatus of identification information of the initialization seed expression used for generating the pilot signal after adjustment, and the second apparatus determines the adjusted pilot signal based on the received identification information of the initialization seed expression.

Because the pilot signal in the second communication signal is a reference signal agreed on by both the first apparatus and the second apparatus, if the first apparatus adjusts the pilot signal in the second communication signal, superposes the adjusted first communication signal and the sensing signal, and sends the superposed first communication signal and sensing signal to the second apparatus, the second apparatus receives the first signal obtained after the pilot signal in the first communication signal and the sensing signal are superposed, and the first signal is different from the pilot signal in the second communication signal. If the second apparatus further performs channel estimation based on the pilot signal in the second communication signal, channel estimation is inaccurate. Therefore, in this embodiment of this application, when the first signal obtained after the pilot signal in the first communication signal after adjustment and the sensing signal are superposed is different from the pilot signal in the second communication signal, to enable the second apparatus to accurately perform channel estimation, the second apparatus needs to be notified of an adjustment manner of the pilot signal in the second communication signal.

In some possible implementations, to reduce signaling overheads of sending the second indication information by the first apparatus to the second apparatus, in this embodiment of this application, the first apparatus and the second apparatus pre-agree on a plurality of manners of adjusting the pilot signal in the to-be-sent second communication signal. After adjusting the pilot signal in the to-be-sent second communication signal, the first apparatus notifies the second apparatus of a used adjustment manner by using the second indication information. For example, the second indication information includes an index (the index may be the sequence number of the initialization seed expression sequence for generating the pilot sequence, or other information pre-agreed on by the first apparatus and the second apparatus). The index has a correspondence with the adjustment manner. The first apparatus and the second apparatus pre-store the correspondence. After receiving the second indication information, the second apparatus determines the adjustment manner based on the index and the correspondence.

For example, it is assumed that the pilot signal in the to-be-sent second communication signal is A, and the sensing signal is B. The first apparatus and the second apparatus pre-agree on three different manners of adjusting the pilot signal in the to-be-sent second communication signal: In an adjustment manner 1, the adjusted pilot signal in the first communication signal is C1, and an index corresponding to the adjustment manner 1 is 0. In an adjustment manner 2, the adjusted pilot signal in the first communication signal is C2, and an index corresponding to the adjustment manner 2 is 1. In a manner 3, the adjusted pilot signal in the first communication signal is C3, and an index corresponding to the adjustment manner 3 is 2. If the first apparatus adjusts the pilot signal in the to-be-sent second communication signal to C1, the second indication information sent by the first apparatus to the second apparatus includes an index "0", the second apparatus determines, based on the index "0" included in the second indication information, that the adjusted pilot signal in the first communication signal is C1, and the second apparatus performs channel estimation based on a first signal obtained after the adjusted pilot signal C1 and the sensing signal B are superposed.

In some possible implementations, if the first apparatus is a network device, and the second apparatus is a terminal device, the first apparatus may send the second indication information to the second apparatus in a plurality of manners such as DCI, RRC signaling, or a MAC CE. If the first apparatus is a terminal device, and the second apparatus is a network device, the first apparatus may send the second indication information to the second apparatus in a manner such as UCI. If both the first apparatus and the second apparatus are terminal devices, the first apparatus may send the second indication information to the second apparatus in a manner such as SCI.

In this embodiment of this application, when the first apparatus sends the communication signal and the sensing signal to the second apparatus on the target transmission resource, transmission of the communication signal and the sensing signal between the first apparatus and the second apparatus may be implemented based on either of the foregoing two solutions. In an implementation process, the first apparatus may further notify the second apparatus of a used transmission solution. If the first apparatus transmits the communication signal and the sensing signal based on the solution 1, the first apparatus further needs to notify the second apparatus of the transmission resource that is not occupied by the sensing signal.

In this embodiment of this application, the first apparatus may send third indication information to the second apparatus, to notify the used transmission solution and the transmission resource that is not occupied by the sensing signal when the first transmission solution is used.

The first apparatus may use the third indication information to carry the time domain resource information, and indicate, by using the time domain resource information, the transmission resource that is not occupied by the sensing signal when a first transmission solution is used. The time domain resource information may include the start time point and the end time point of the time domain resource in the transmission resource that is not occupied by the sensing signal, or the time domain resource information may include the start time point and a time domain resource length of the time domain resource in the transmission resource that is not occupied by the sensing signal, or the time domain resource information may include the end time point and a time domain resource length of the time domain resource in the transmission resource that is not occupied by the sensing signal.

The following describes formats of the third indication information that respectively correspond to different time domain resource information.

    1. The time domain resource information includes the start time point and the end time point of the time domain resource in the transmission resource that is not occupied by the sensing signal.

For example, a format of the third indication information may be shown in Table 1.

Table 1: Format of third indication information

| Control word | Transmission solution | Resource occupation manner | Ta | Tb |
| --- | --- | --- | --- | --- |
| Word length | 1 bit | 1 bit | 2 bits | 2 bits |

The transmission solution includes a solution 1 and a solution 2. If the first apparatus transmits the communication signal and the sensing signal based on the solution 1, a value corresponding to the transmission solution is 1. If the first apparatus transmits the communication signal and the sensing signal based on the solution 2, a value corresponding to the transmission solution is 0. Alternatively, a value corresponding to the transmission solution in the third indication information may be in a default state. For example, when the first apparatus and the second apparatus pre-agree that Solution 1 or Solution 2 is used, the value corresponding to the transmission solution in the third indication information may be default.

If the value of the transmission solution is 1, a value of the resource occupation manner needs to be further determined. The resource occupation manner includes: the transmission resource that is not occupied by the sensing signal is all transmission resources in the target transmission resource other than the transmission resource occupied by the pilot signal (the foregoing resource allocation manner 1 of the sensing signal), and the transmission resource that is not occupied by the sensing signal is some transmission resources in the target transmission resource other than the transmission resource occupied by the pilot signal (any one of the foregoing resource allocation manner 2 of the sensing signal, the foregoing resource allocation manner 3 of the sensing signal, and the foregoing resource allocation manner 4 of the sensing signal). If the resource occupation manner is the resource allocation manner 1 of the sensing signal, the value corresponding to the resource occupation manner is 0. If the resource occupation manner is any one of the resource allocation manner 2 of the sensing signal, the resource allocation manner 3 of the sensing signal, and the resource allocation manner 4 of the sensing signal, the value corresponding to the resource occupation manner is 1.

If the value corresponding to the resource occupation manner is 1, it indicates that the first apparatus sends the sensing signal on none of all the frequency domain resources in the target transmission resource in specific duration, and the first apparatus needs to notify the second apparatus of a time domain range in the transmission resource that is not occupied by the sensing signal. Ta indicates the start time point of the time domain resource in the transmission resource that is not occupied by the sensing signal, and Tb indicates the end time point of the time domain resource in the transmission resource that is not occupied by the sensing signal.

A value of Ta can be 00, 01, 10, or 11. If the value of Ta is 00, it indicates that the start time point is a start time point of the first time domain resource occupied by the pilot signal (for example, if the first time domain resource occupied by the pilot signal is one OFDM symbol, the start time point is an OFDM symbol occupied by the pilot signal). If the value of Ta is 01, it indicates that the start time point is a start time point of a second time domain resource that is adjacent to the first time domain resource occupied by the pilot signal and that is located before the first time domain resource (for example, if the first time domain resource occupied by the pilot signal is one OFDM symbol, and the second time domain resource includes one OFDM symbol, the start time point is one OFDM symbol before an OFDM symbol occupied by the pilot signal). If the value of Ta is 10, it indicates that the start time point is a start time point of a sensing signal periodicity including the first time domain resource occupied by the pilot signal. If the value of Ta is 11, it indicates that the start time point is a start time point of P sensing signal periodicities before the sensing signal periodicity including the first time domain resource occupied by the pilot signal. P is greater than or equal to 1.

A value of Tb can be 00, 01, 10, or 11. If the value of Tb is 00, it indicates that the end time point is an end time point of the first time domain resource occupied by the pilot signal (for example, if the first time domain resource occupied by the pilot signal is one OFDM symbol, the end time point is an OFDM symbol occupied by the pilot signal). If the value of Tb is 01, it indicates that the end time point is an end time point of the second time domain resource that is adjacent to the first time domain resource occupied by the pilot signal and that is located after the first time domain resource (for example, if the first time domain resource occupied by the pilot signal is one OFDM symbol, and the second time domain resource includes one OFDM symbol, the end time point is one OFDM symbol after an OFDM symbol occupied by the pilot signal). If the value of Tb is 10, it indicates that the end time point is an end time point of a sensing signal periodicity including the first time domain resource occupied by the pilot signal. If the value of Tb is 11, it indicates that the end time point is an end time point of Q sensing signal periodicities after the sensing signal periodicity including the first time domain resource occupied by the pilot signal. Q is greater than or equal to 1.

Because the value of Ta carried in the third indication information indicates a location relationship between the start time point and the first time domain resource occupied by the pilot signal, and the value of Tb carried in the third indication information indicates a location relationship between the end time point and the first time domain resource occupied by the pilot signal, in some possible implementations, the first apparatus sends the communication signal to the second apparatus on the target transmission resource, and a location of the pilot signal in the communication signal is known by the first apparatus and the second apparatus. Therefore, after receiving the third indication information, the second apparatus may further determine, based on Ta and Tb that are carried in the third indication information and the location of the pilot signal in the communication signal, a location of the time domain resource in the transmission resource that is not occupied by the sensing signal.

It should be noted that when the communication signal and the sensing signal are transmitted by using the transmission solution 2 (a value corresponding to the transmission solution is 0), the sensing signal may be transmitted on all resources of the target transmission resource. Therefore, the resource occupancy manner field, the Ta field, and the Tb field in the third indication information are invalid, and values may be any values.

The following describes the format of the third indication information with reference to several different types of communication signals.

In some possible implementations, when sending the communication signal and the sensing signal by using the transmission solution 1 in this embodiment of this application, the first apparatus may select different resource occupation manners based on different communication signal types. For example, for a signal whose pilot signals are centrally distributed in frequency domain in the communication signal, the sensing signal may be sent on none of the frequency domain resources in the target transmission resource (that is, any one of the resource allocation manner 2 of the sensing signal, the resource allocation manner 3 of the sensing signal, and the resource allocation manner 4 of the sensing signal is used). For another example, for a signal whose pilot signals are sparsely distributed in frequency domain in the communication signal, the sensing signal may not be sent on a frequency domain resource occupied by the pilot signal in the target transmission resource (that is, the resource allocation manner 1 of the sensing signal is used). For another example, for a signal whose pilot signals are centrally distributed for a long time period in the communication signal, the sensing signal may not be sent on the first time domain resource on which the pilot signal is located in the target transmission resource and time domain resources of a specific length before and after the first time domain resource (that is, the resource allocation manner 3 or the resource allocation manner 4 of the sensing signal is used).

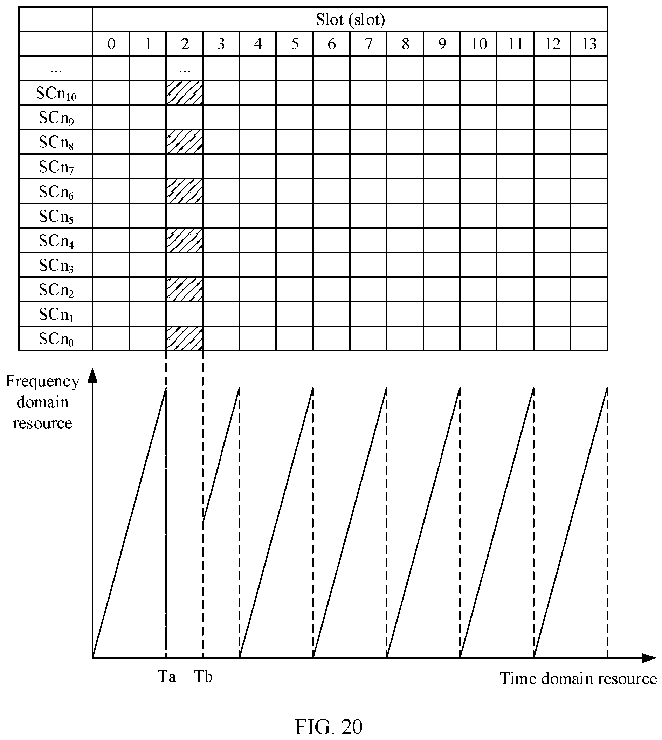

For example, the communication signal is a demodulation reference signal (Demodulation Reference Signal, DMRS) or a channel state information (Channel State Information, CSI) signal whose pilot signals are centrally distributed in frequency domain. A resource allocation manner of the communication signal in the target transmission resource is shown in FIG. 20. A time unit included in the time domain resource is one OFDM symbol, a frequency domain unit included in the frequency domain resource is one subcarrier, the transmission resource occupied by the pilot signal is at a location filled with a shadow, and a transmission resource occupied by a non-pilot signal is at another location. The sensing signal is a periodic signal, and a periodicity of the sensing signal is two OFDM symbols.

If the first apparatus may use the resource allocation manner 2 of the sensing signal, the sensing signal does not occupy a transmission resource block determined based on both the first time domain resource occupied by the pilot signal and all the frequency domain resources of the target transmission resource. The sensing signal transmitted on the target transmission resource is shown in FIG. 20. The sensing signal is not transmitted on a transmission resource block determined based on a third OFDM symbol and all frequency domain units $f_0$, $f_1$, $f_2$, ..., and $f_{N-1}$.

The format of the third indication information sent by the first apparatus to the second apparatus may be shown in Table 2.

Table 2: Format of third indication information

| Control word | Transmission solution | Resource occupation manner | Ta | Tb |
|---|---|---|---|---|
| Value | 1 | 1 | 00 | 00 |

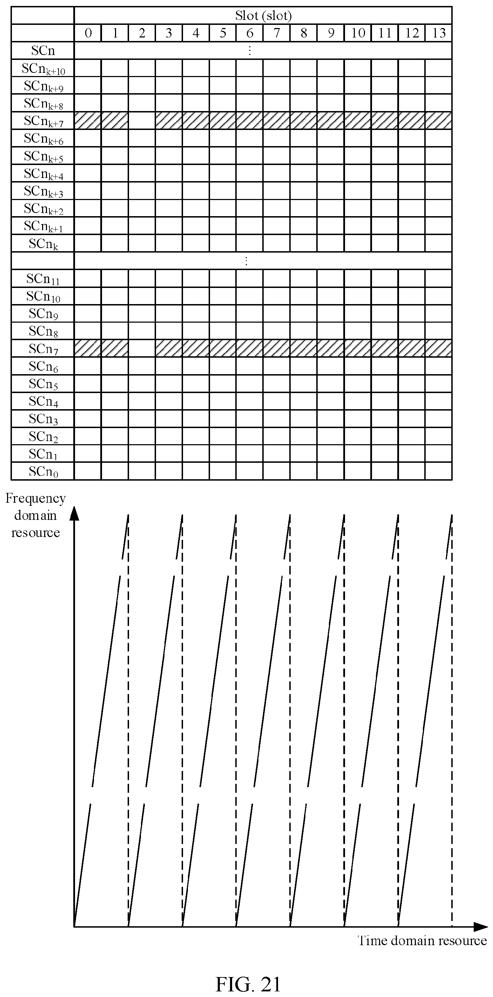

For another example, the communication signal is a phase tracking reference signal (Phase tracking reference signal, PTRS) whose pilot signals are sparsely distributed in frequency domain. A resource allocation manner of the communication signal in the target transmission resource is shown in FIG. 21. A time unit included in the time domain resource is one OFDM symbol, a frequency domain unit included in the frequency domain resource is one subcarrier, the transmission resource occupied by the pilot signal is at a location filled with a shadow, and a transmission resource occupied by a non-pilot signal is at another location.

The sensing signal is a periodic signal. If the first apparatus may use the resource allocation manner 1 of the sensing signal, the sensing signal does not occupy the transmission resource occupied by the pilot signal. A sensing signal transmitted on the target transmission resource is shown in FIG. 21, and the sensing signal is not transmitted on a transmission resource block occupied by the pilot signal of the communication signal.

The format of the third indication information sent by the first apparatus to the second apparatus may be shown in Table 3.

Table 3: Format of third indication information

| Control word | Transmission solution | Resource occupation manner | Ta | Tb |
|---|---|---|---|---|
| Value | 1 | 0 | 00 | 00 |

Alternatively, the first apparatus adjusts the pilot signal in the communication signal, so that a signal obtained after the adjusted pilot signal and the sensing signal are superposed is the same as the pilot signal existing before adjustment. In this case, the format of the third indication information sent by the first apparatus to the second apparatus may be shown in Table 4.

Table 4: Format of third indication information

| Control word | Transmission solution | Resource occupation manner | Ta | Tb |
|---|---|---|---|---|
| Value | 0 | 0 | 0 | 0 |

It should be noted that when the value of Ta and the value of Tb are 0, it may be considered that a value at the location is invalid. When the transmission solution is 0, it indicates that a solution of adjusting the pilot signal in the communication signal is used, and the sensing signal may be transmitted on all target transmission resources.

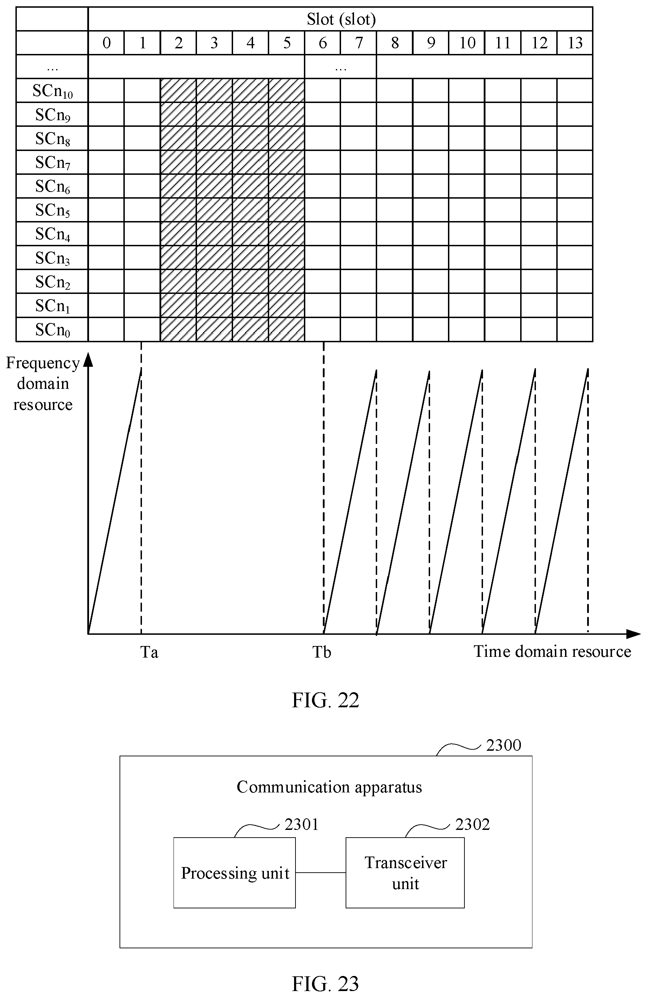

For another example, the communication signal is a synchronization signal and physical broadcast channel block (Synchronization Signal and Physical Broadcast Channel Block, SSB) whose pilot signals are centrally distributed for a long time period. A resource allocation manner of the communication signal in the target transmission resource is shown in FIG. 22. A time unit included in the time domain resource is one OFDM symbol, a frequency domain unit included in the frequency domain resource is one subcarrier, the transmission resource occupied by the pilot signal is at a location filled with a shadow, and a transmission resource occupied by a non-pilot signal is at another location.

The sensing signal is a periodic signal. If the first apparatus may use the resource allocation manner 4 of the sensing signal, the sensing signal does not occupy a transmission resource block determined based on both a third time domain resource and all the frequency domain resources of the target transmission resource. The third time domain resource is a $2^{nd}$ periodicity, a $3^{rd}$ periodicity, and a $4^{th}$ periodicity of the sensing signal. A sensing signal transmitted in the target transmission resource is shown in FIG. 22.

The format of the third indication information sent by the first apparatus to the second apparatus may be shown in Table 5.

Table 5: Format of third indication information

| Control word | Transmission solution | Resource occupation manner | Ta | Tb |
|---|---|---|---|---|
| Word length | 1 | 1 | 10 | 10 |

Alternatively, the first apparatus adjusts the pilot signal in the communication signal, so that a signal obtained after the adjusted pilot signal and the sensing signal are superposed is the same as the pilot signal existing before adjustment. In this case, the format of the third indication information sent by the first apparatus to the second apparatus may be shown in Table 4.

2. The time domain resource information includes a start time point and a time domain resource length of the time domain resource in the transmission resource that is not occupied by the sensing signal.

For example, a format of the third indication information may be shown in Table 6.

Table 6: Format of third indication information

| Control word | Transmission solution | Resource occupation manner | Ta | $\Delta T$ |
|---|---|---|---|---|
| Word length | 1 bit | 1 bit | 2 bits | 2 bits |

For the transmission solution, the resource occupation manner, the value of Ta, and meanings represented by the transmission solution, the resource occupation manner, the value of Ta, refer to the foregoing descriptions. $\Delta T$ represents the time domain resource length. For example, the time domain resource length may be a quantity of time units. Values of $\Delta T$ include 00, 01, 10, and 11. If the value of $\Delta T$ is 00, it indicates that the time domain resource length is 0, and the end time point of the time domain resource in the transmission resource that is not occupied by the sensing signal is the end time point of the first time domain resource occupied by the pilot signal. If the value of $\Delta T$ is 01, it indicates that the time domain resource length is one time unit, and the end time point of the time domain resource in the transmission resource that is not occupied by the sensing signal is an end time point of one time unit after the first time domain resource occupied by the pilot signal. If the value of $\Delta T$ is 10, it indicates that the time domain resource length is two time units, and the end time point of the time domain resource in the transmission resource that is not occupied by the sensing signal is an end time point of two time units after the first time domain resource occupied by the pilot signal. If the value of $\Delta T$ is 11, it indicates that the time domain resource length is three time units, and the end time point of the time domain resource in the transmission resource that is not occupied by the sensing signal is an end time point of three time units after the first time domain resource occupied by the pilot signal.

3. The time domain resource information includes an end time point and a time domain resource length of the time domain resource in the transmission resource that is not occupied by the sensing signal.

For example, a format of the third indication information may be shown in Table 7.

Table 7: Format of third indication information

| Control word | Transmission solution | Resource occupation manner | Tb | $\Delta T$ |
|---|---|---|---|---|
| Word length | 1 bit | 1 bit | 2 bits | 2 bits |

For the transmission solution, the resource occupation manner, the value of Tb, and meanings represented by the transmission solution, the resource occupation manner, the value of Tb, refer to the foregoing descriptions. $\Delta T$ represents the time domain resource length. For example, the time domain resource length may be a quantity of time units. Values of $\Delta T$ include 00, 01, 10, and 11. If the value of $\Delta T$ is 00, it indicates that the time domain resource length is 0, and the start time point of the time domain resource in the transmission resource that is not occupied by the sensing signal is the start time point of the first time domain resource occupied by the pilot signal. If the value of $\Delta T$ is 01, it indicates that the time domain resource length is one time unit, and the start time point of the time domain resource in the transmission resource that is not occupied by the sensing signal is a start time point of one time unit before the first time domain resource occupied by the pilot signal. If the value of $\Delta T$ is 10, it indicates that the time domain resource length is two time units, and the start time point of the time domain resource in the transmission resource that is not occupied by the sensing signal is a start time point of two time units before the first time domain resource occupied by the pilot signal. If the value of $\Delta T$ is 11, it indicates that the time domain resource length is three time units, and the start time point of the time domain resource in the transmission resource that is not occupied by the sensing signal is a start time point of three time units before the first time domain resource occupied by the pilot signal.

Based on the foregoing embodiments, an embodiment of this application further provides a communication apparatus. As shown in FIG. 23, a communication apparatus 2300 may include a processing unit 2301 and a transceiver unit 2302. The transceiver unit 2302 is configured to perform communication by the communication apparatus 2300, for example, receive information, a message, or data, or send information, a message, or data. The processing unit 2301 is configured to control and manage an action of the communication apparatus 2300. The processing unit 2301 may further control a step performed by the transceiver unit 2302.

For example, the communication apparatus 2300 may be specifically the first apparatus, a processor, a chip, a chip system, or a functional module in the first apparatus, or the like in the foregoing embodiments.

In an embodiment, the processing unit 2301 is configured to generate a communication signal and a sensing signal. The transceiver unit 2302 is configured to send the communication signal and the sensing signal to a second apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal.

In a possible design, the transceiver unit 2302 is further configured to:
send first indication information to the second apparatus. The first indication information indicates a transmission resource that is not occupied by the sensing signal in the target transmission resource.

In a possible design, the transmission resource that is not occupied includes a first time domain resource occupied by the pilot signal and a frequency domain resource occupied by the pilot signal.

In a possible design, the transmission resource that is not occupied includes a first time domain resource occupied by the pilot signal and all frequency domain resources of the target transmission resource.

In a possible design, the transmission resource that is not occupied includes a first time domain resource occupied by the pilot signal, a second time domain resource adjacent to the time domain resource, and all frequency domain resources of the target transmission resource.

In a possible design, the second time domain resource includes M time units, and M is greater than or equal to 1.

In a possible design, the sensing signal is a periodic signal; and the transmission resource that is not occupied includes a third time domain resource whose length is N consecutive sensing signal periodicities and all frequency domain resources of the target transmission resource, the third time domain resource includes a first time domain resource occupied by the pilot signal, and N is greater than or equal to 1.

In a possible design, the first indication information includes time domain resource information of the transmission resource that is not occupied; and the time domain resource information includes a start time point and an end time point of a time domain resource in the transmission resource that is not occupied; or the time domain resource information includes a length of a time domain resource in the transmission resource that is not occupied and a start time point of the time domain resource; or the time domain resource information includes a length of a time domain resource in the transmission resource that is not occupied and an end time point of the time domain resource.

In another embodiment, the processing unit 2301 is configured to generate a first communication signal and a sensing signal. The transceiver unit 2302 is configured to send a first communication signal and the sensing signal to a second apparatus on a target transmission resource. A first signal obtained after a pilot signal in the first communication signal and the sensing signal are superposed has a constant modulus characteristic.

In a possible design, the processing unit 2301 is specifically configured to adjust a pilot signal in a to-be-sent second communication signal based on the sensing signal, to obtain the first communication signal.

In a possible design, the first signal is the same as the pilot signal in the second communication signal.

In a possible design, the transceiver unit 2302 is further configured to send second indication information to the second apparatus. The second indication information indicates an adjustment manner of adjusting the pilot signal in the to-be-sent second communication signal.

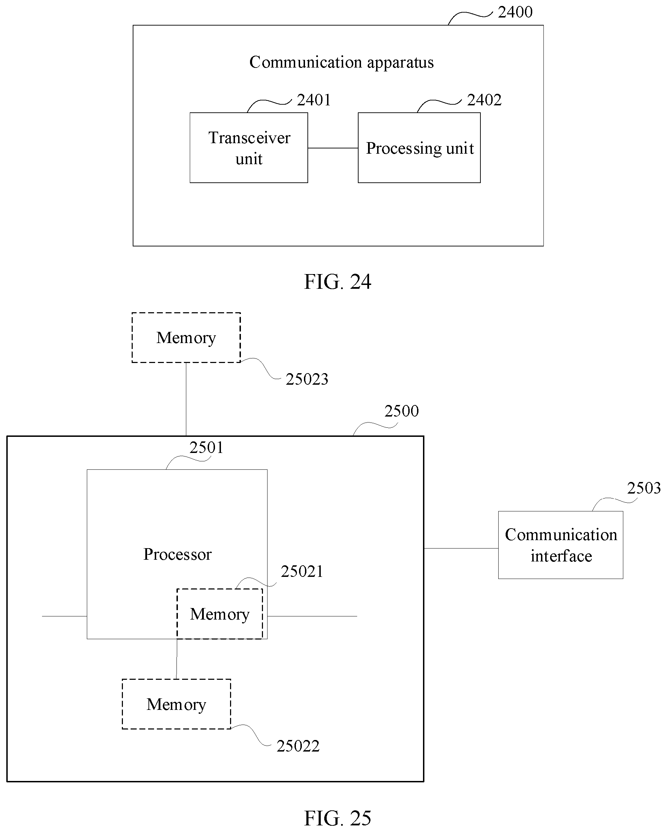

Based on the foregoing embodiments, an embodiment of this application further provides a communication apparatus. As shown in FIG. 24, a communication apparatus 2400 may include a transceiver unit 2401 and a processing unit 2402. The transceiver unit 2401 is configured to perform communication by the communication apparatus 2400, for example, receive information, a message, or data, or send information, a message, or data. The processing unit 2402 is configured to control and manage an action of the communication apparatus 2400. The processing unit 2402 may further control a step performed by the transceiver unit 2401.

For example, the communication apparatus 2400 may be specifically the second apparatus, a processor, a chip, a chip system, or a functional module in the second apparatus, or the like in the foregoing embodiments.

In an embodiment, the transceiver unit 2401 is configured to receive a communication signal and a sensing signal that are sent by a first apparatus on a target transmission resource. The communication signal includes a pilot signal and a non-pilot signal, a transmission resource occupied by the non-pilot signal overlaps a transmission resource occupied by the sensing signal, and the sensing signal does not occupy a transmission resource used to transmit the pilot signal. The processing unit 2402 is configured to: perform communication processing based on the communication signal, and perform target sensing based on the sensing signal.

In a possible design, the transceiver unit 2401 is further configured to receive first indication information sent by the first apparatus. The first indication information indicates a transmission resource that is not occupied by the sensing signal in the target transmission resource. The processing unit 2402 is specifically configured to obtain the sensing signal based on the first indication information, to perform target sensing.

In a possible design, the transmission resource that is not occupied includes a first time domain resource occupied by the pilot signal and a frequency domain resource on which the pilot signal is located.

In a possible design, the transmission resource that is not occupied includes a first time domain resource occupied by the pilot signal and all frequency domain resources of the target transmission resource.

In a possible design, the transmission resource that is not occupied includes a first time domain resource occupied by the pilot signal, a second time domain resource adjacent to the first time domain resource, and all frequency domain resources of the target transmission resource.

In a possible design, the second time domain resource includes M time units, and M is greater than or equal to 1.

In a possible design, the sensing signal is a periodic signal; and the transmission resource that is not occupied includes a third time domain resource whose length is N consecutive sensing signal periodicities and all frequency domain resources of the target transmission resource, the third time domain resource includes a first time domain resource occupied by the pilot signal, and N is greater than or equal to 1.

In a possible design, the first indication information includes time domain resource information of the transmission resource that is not occupied; and the time domain resource information includes a start time point and an end time point of a time domain resource in the transmission resource that is not occupied; or the time domain resource information includes a length of a time domain resource in the transmission resource that is not occupied and a start time point of the time domain resource; or the time domain resource information includes a length of a time domain resource in the transmission resource that is not occupied and an end time point of the time domain resource.

In another embodiment, the transceiver unit 2401 is configured to receive a first communication signal and a sensing signal that are sent by a first apparatus on a target transmission resource. A first signal obtained after a pilot signal in the first communication signal and the sensing signal are superposed has a constant modulus characteristic. The processing unit 2402 is configured to: perform communication processing based on the communication signal, and perform target sensing based on the sensing signal.

In a possible design, the first communication signal is obtained by the first apparatus by adjusting a pilot signal in a to-be-sent second communication signal based on the sensing signal.

In a possible design, the first signal is the same as the pilot signal in the second communication signal.

In a possible design, the transceiver unit 2401 is further configured to receive second indication information sent by the first apparatus. The second indication information indicates an adjustment manner of adjusting the pilot signal in the to-be-sent second communication signal. The processing unit 2402 is further configured to perform channel estimation based on the second indication information and the first signal.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that may store program code, for example, a USB flash drive, a removable hard disk, a ROM, a RAM, a magnetic disk, or an optical disc.

Based on the foregoing embodiments, an embodiment of this application further provides a communication apparatus. As shown in FIG. 25, a communication apparatus 2500 may include a processor 2501. The processor 2501 may be coupled to a memory. Optionally, the memory may be integrated with the processor 2501, for example, a memory 25021 in FIG. 25; or may be included in the communication apparatus 2500 and separated from the processor 2501, for example, a memory 25022 in FIG. 25. Optionally, the memory may alternatively be disposed outside the communication apparatus 2500, for example, a memory 25023 in FIG. 25. Optionally, the processor 2501 may receive or send a signal, information, a message, or the like through a communication interface 2503. The communication interface 2503 may be included inside the communication apparatus 2500, or may be disposed outside the communication apparatus 2500 and is connected to the communication apparatus 2500.

Specifically, the processor 2501 may be a central processing unit (central processing unit, CPU), a network processor (network processor, NP), or a combination of a CPU and an NP. The processor 2501 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

In an optional implementation, the memory is configured to store a program, computer instructions, a configuration file of a logic circuit, or the like. Specifically, the program may include program code, and the program code includes computer operation instructions. The memory may include a RAM, and may further include a non-volatile memory (non-volatile memory), for example, one or more disk memories. The processor 2501 executes an application program stored in the memory, to implement the foregoing functions, so as to implement a function of the communication apparatus 2500.

For example, the communication apparatus 2500 may be the first apparatus in the foregoing embodiments, or may be the second apparatus in the foregoing embodiments.

In an embodiment, when the communication apparatus 2500 implements functions of the first apparatus in the foregoing embodiments, the processor 2501 may implement operations performed by the first apparatus in the foregoing embodiments. Specifically, for related specific descriptions, refer to the related descriptions in the embodiment shown in FIG. 4 or FIG. 19. Details are not described herein again.

In another embodiment, when the communication apparatus 2500 implements functions of the second apparatus in the foregoing embodiments, the processor 2501 may implement operations other than receiving and sending operations performed by the second apparatus in the foregoing embodiments. Specifically, for related specific descriptions, refer to the related descriptions in the embodiment shown in FIG. 4 or FIG. 19. Details are not described herein again.

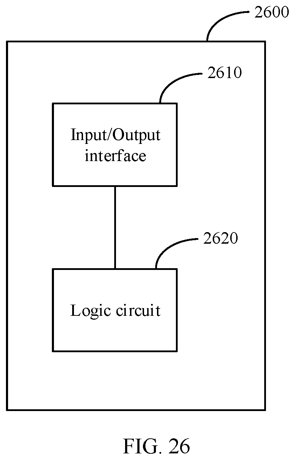

As shown in FIG. 26, an embodiment of this application further provides another communication apparatus 2600 that may be configured to implement functions of the first apparatus and the second apparatus in the foregoing methods. The communication apparatus 2600 may be a communication apparatus or a chip in the communication apparatus. The communication apparatus may include at least one input/output interface 2610 and a logic circuit 2620. The input/output interface 2610 may be an input/output circuit. The logic circuit 2620 may be a signal processor, a chip, or another integrated circuit that can implement the method in this application.

The at least one input/output interface 2610 is configured to input or output information, a signal, data, or the like. For example, when the apparatus is the first apparatus, the input/output interface 2610 is configured to output second information to send a communication signal and a sensing signal. For example, when the apparatus is the second apparatus, the input/output interface 2610 is configured to receive the communication signal and the sensing signal.

The logic circuit 2620 is configured to perform some or all of the steps in any one of the methods provided in embodiments of this application. For example, when the apparatus is the first apparatus, the apparatus is configured to perform the steps performed by the first apparatus in the possible implementations in the foregoing method embodiments. For example, the logic circuit 2620 is configured to determine a transmission resource occupied by the communication signal and the sensing signal. When the apparatus is the second apparatus, the apparatus is configured to perform the steps performed by the second apparatus in the possible implementation methods in the foregoing method embodiments. For example, the logic circuit 2620 is configured to: perform communication processing based on the communication signal, and perform target sensing based on the sensing signal.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by another terminal or a network apparatus to the terminal. Alternatively, the chip in the terminal outputs information to another module (for example, a radio frequency module or an antenna) in the terminal, where the information is sent by the terminal to another terminal or a network apparatus.

When the communication apparatus is a chip used in a network apparatus, the chip in the network apparatus implements the functions of the network apparatus in the foregoing method embodiments. The chip in the network apparatus receives information from another module (for example, a radio frequency module or an antenna) in the network apparatus, where the information is sent by the terminal or another network apparatus to the network apparatus; or the chip in the network apparatus outputs information to another module (for example, a radio frequency module or an antenna) in the network apparatus, where the information is sent by the network apparatus to the terminal or another network apparatus.

Based on the foregoing embodiments, an embodiment of this application provides a communication system. The communication system may include the first apparatus, the second apparatus, and the like in the foregoing embodiments.

An embodiment of this application further provides a computer-readable storage medium. The computer-readable storage medium is configured to store a computer program. When the computer program is executed by a computer, the computer may implement the method provided in the embodiment shown in FIG. 4 or FIG. 19. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

An embodiment of this application further provides a computer program product. The computer program product is configured to store a computer program. When the computer program is executed by a computer, the computer may implement the method provided in the embodiment shown in FIG. 4 or FIG. 19.

An embodiment of this application further provides a chip, including a processor. The processor is coupled to a memory, and is configured to invoke a program in the memory, so that the chip implements the method provided in the embodiment shown in FIG. 4 or FIG. 19.

An embodiment of this application further provides a chip. The chip is coupled to a memory, and the chip is configured to implement the method provided in the embodiment shown in FIG. 4 or FIG. 19.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

    generating, by a first apparatus, a communication signal and a sensing signal; and
    sending, by the first apparatus, the communication signal and the sensing signal to a second apparatus on a target transmission resource, wherein
    the communication signal comprises a pilot signal and a non-pilot signal, a transmission resource occupied by the non-pilot signal overlaps a transmission resource occupied by the sensing signal, and the sensing signal does not occupy a transmission resource used to transmit the pilot signal.

2. The method according to claim 1, wherein the method further comprises:
    sending, by the first apparatus, first indication information to the second apparatus, wherein the first indication information indicates a transmission resource that is not occupied by the sensing signal in the target transmission resource.

3. The method according to claim 2, wherein the transmission resource that is not occupied comprises a first time domain resource occupied by the pilot signal and a frequency domain resource occupied by the pilot signal.

4. The method according to claim 2, wherein the transmission resource that is not occupied comprises a first time domain resource occupied by the pilot signal and all frequency domain resources of the target transmission resource.

5. The method according to claim 2, wherein the transmission resource that is not occupied comprises a first time domain resource occupied by the pilot signal, a second time domain resource adjacent to the first time domain resource, and all frequency domain resources of the target transmission resource.

6. The method according to claim 5, wherein the second time domain resource comprises M time units, and M is greater than or equal to 1.

7. The method according to claim 2, wherein the sensing signal is a periodic signal; and
    the transmission resource that is not occupied comprises a third time domain resource whose length is N consecutive sensing signal periodicities and all frequency domain resources of the target transmission resource, the third time domain resource comprises a first time domain resource occupied by the pilot signal, and N is greater than or equal to 1.

8. The method according to any one of claims 5 to 7, wherein the first indication information comprises time domain resource information of the transmission resource that is not occupied; and
    the time domain resource information comprises a start time point and an end time point of a time domain resource in the transmission resource that is not occupied; or the time domain resource information comprises a length of a time domain resource in the transmission resource that is not occupied and a start time point of the time domain resource; or the time domain resource information comprises a length of a time domain resource in the transmission resource that is not occupied and an end time point of the time domain resource.

9. A communication method, wherein the method comprises:

    receiving, by a second apparatus, a communication signal and a sensing signal that are sent by a first apparatus on a target transmission resource, wherein the communication signal comprises a pilot signal and a non-pilot signal, a transmission resource occupied by the non-pilot signal overlaps a transmission resource occupied by the sensing signal, and the sensing signal does not occupy a transmission resource used to transmit the pilot signal; and
    performing, by the second device, communication processing based on the communication signal, and performing target sensing based on the sensing signal.

10. The method according to claim 9, wherein the method further comprises:

    receiving, by the second apparatus, first indication information sent by the first apparatus, wherein the first indication information indicates a transmission resource that is not occupied by the sensing signal in the target transmission resource; and

obtaining, by the second apparatus, the sensing signal based on the first indication information, to perform target sensing.

11. The method according to claim 10, wherein the transmission resource that is not occupied comprises a first time domain resource occupied by the pilot signal and a frequency domain resource on which the pilot signal is located.

12. The method according to claim 10, wherein the transmission resource that is not occupied comprises a first time domain resource occupied by the pilot signal and all frequency domain resources of the target transmission resource.

13. The method according to claim 10, wherein the transmission resource that is not occupied comprises a first time domain resource occupied by the pilot signal, a second time domain resource adjacent to the first time domain resource, and all frequency domain resources of the target transmission resource.

14. The method according to claim 13, wherein the second time domain resource comprises M time units, and M is greater than or equal to 1.

15. The method according to claim 10, wherein the sensing signal is a periodic signal; and
the transmission resource that is not occupied comprises a third time domain resource whose length is N consecutive sensing signal periodicities and all frequency domain resources of the target transmission resource, the third time domain resource comprises a first time domain resource occupied by the pilot signal, and N is greater than or equal to 1.

16. The method according to any one of claims 11 to 15, wherein the first indication information comprises time domain resource information of the transmission resource that is not occupied; and
the time domain resource information comprises a start time point and an end time point of a time domain resource in the transmission resource that is not occupied; or the time domain resource information comprises a length of a time domain resource in the transmission resource that is not occupied and a start time point of the time domain resource; or the time domain resource information comprises a length of a time domain resource in the transmission resource that is not occupied and an end time point of the time domain resource.

17. A communication method, wherein the method comprises:

generating, by a first apparatus, a first communication signal and a sensing signal; and
sending, by the first apparatus, the first communication signal and the sensing signal on a target transmission resource, wherein
a first signal obtained after a pilot signal in the first communication signal and the sensing signal are superposed has a constant modulus characteristic.

18. The method according to claim 17, wherein the generating, by a first apparatus, a first communication signal comprises:
adjusting, by the first apparatus, a pilot signal in a to-be-sent second communication signal based on the sensing signal, to obtain the first communication signal.

19. The method according to claim 18, wherein the first signal is the same as the pilot signal in the second communication signal.

20. The method according to claim 18, wherein the method further comprises:
sending, by the first apparatus, second indication information to the second apparatus, wherein the second indication information indicates an adjustment manner of adjusting the pilot signal in the to-be-sent second communication signal.

21. A communication method, wherein the method comprises:

receiving, by a second apparatus, a first communication signal and a sensing signal that are sent by a first apparatus on a target transmission resource, wherein a first signal obtained after a pilot signal in the first communication signal and the sensing signal are superposed has a constant modulus characteristic; and
performing, by the second apparatus, communication processing based on the communication signal, and performing target sensing based on the sensing signal.

22. The method according to claim 21, wherein the first communication signal is obtained by the first apparatus by adjusting a pilot signal in a to-be-sent second communication signal based on the sensing signal.

23. The method according to claim 22, wherein the first signal is the same as the pilot signal in the second communication signal.

24. The method according to claim 22, wherein the method further comprises:

   receiving, by the second apparatus, second indication information sent by the first apparatus, wherein the second indication information indicates an adjustment manner of adjusting the pilot signal in the to-be-sent second communication signal; and
   performing, by the second apparatus, channel estimation based on the second indication information and the first signal.

25. A communication apparatus, wherein the apparatus comprises a module or a unit configured to perform the method according to any one of claims 1 to 8.

26. A communication apparatus, wherein the apparatus comprises a module or a unit configured to perform the method according to any one of claims 9 to 16.

27. A communication apparatus, wherein the apparatus comprises a module or a unit configured to perform the method according to any one of claims 17 to 20.

28. A communication apparatus, wherein the apparatus comprises a module or a unit configured to perform the method according to any one of claims 21 to 24.

29. A communication apparatus, comprising a processor, wherein the processor is configured to perform the method according to any one of claims 1 to 8 or the method according to any one of claims 17 to 20 by invoking computer instructions or a logic circuit in a memory.

30. The apparatus according to claim 29, further comprising the memory.

31. The apparatus according to claim 29 or 30, further comprising a communication interface, wherein the communication interface is configured to receive or send a signal.

32. A communication apparatus, comprising a processor, wherein the processor is configured to perform the method according to any one of claims 9 to 16 or the method according to any one of claims 21 to 24 by invoking computer instructions or a logic circuit in a memory.

33. The apparatus according to claim 32, further comprising the memory.

34. The apparatus according to claim 32 or 33, further comprising a communication interface, wherein the communication interface is configured to receive or send a signal.

35. A computer-readable storage medium, wherein the computer-readable storage medium stores computer-executable instructions, and when the computer-executable instructions are invoked by a computer, the method according to any one of claims 1 to 8, the method according to any one of claims 9 to 16, the method according to any one of claims 17 to 20, or the method according to any one of claims 21 to 24 is performed.

36. A computer program product, comprising instructions, wherein when the instructions are run on a computer, the method according to any one of claims 1 to 8, the method according to any one of claims 9 to 16, the method according to any one of claims 17 to 20, or the method according to any one of claims 21 to 24 is performed.

37. A communication system, comprising the communication apparatus according to any one of claims 25, 27, and 29 to 31 and the communication apparatus according to any one of claims 26, 28, and 32 to 34.

FIG. 1

FIG. 2

FIG. 3

First apparatus

Second apparatus

Step 401: Send a communication signal and a sensing signal on a target transmission resource

Step 402: Send first indication information

Step 403: Perform channel estimation based on a pilot signal included in the communication signal

Step 404: Obtain the sensing signal based on the first indication information, to perform target sensing; and perform communication processing based on the communication signal

FIG. 4

Frequency domain resource

Non-pilot signal

Pilot signal

Non-pilot signal

Pilot signal

Non-pilot signal

Time domain resource

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

Frequency
domain resource

$f_{n-1}$

...

$f_2$

$f_1$

$f_0$

T1   T2   T3   T4   T5   T6   T7   T8

Time domain
resource

FIG. 18

First apparatus

Second
apparatus

Step 1901: Generate a first
communication signal and a
sensing signal

Step 1902: Send the first communication signal and
the sensing signal to the second apparatus on a
target transmission resource

Step 1903: Perform channel estimation
based on a received pilot signal

Step 1904: Perform communication
processing based on the communication
signal, and perform target sensing based on
the sensing signal

FIG. 19

| | Slot (slot) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| ... | | | ... | | | | | | | | | | | |
| $SCn_{10}$ | | | ▨ | | | | | | | | | | | |
| $SCn_9$ | | | | | | | | | | | | | | |
| $SCn_8$ | | | ▨ | | | | | | | | | | | |
| $SCn_7$ | | | | | | | | | | | | | | |
| $SCn_6$ | | | ▨ | | | | | | | | | | | |
| $SCn_5$ | | | | | | | | | | | | | | |
| $SCn_4$ | | | ▨ | | | | | | | | | | | |
| $SCn_3$ | | | | | | | | | | | | | | |
| $SCn_2$ | | | ▨ | | | | | | | | | | | |
| $SCn_1$ | | | | | | | | | | | | | | |
| $SCn_0$ | | | ▨ | | | | | | | | | | | |

FIG. 20

| | Slot (slot) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| SCn | | | | | | | ⋮ | | | | | | | |
| $SCn_{k+10}$ | | | | | | | | | | | | | | |
| $SCn_{k+9}$ | | | | | | | | | | | | | | |
| $SCn_{k+8}$ | | | | | | | | | | | | | | |
| $SCn_{k+7}$ | //// | //// | | //// | //// | //// | //// | //// | //// | //// | //// | //// | //// | //// |
| $SCn_{k+6}$ | | | | | | | | | | | | | | |
| $SCn_{k+5}$ | | | | | | | | | | | | | | |
| $SCn_{k+4}$ | | | | | | | | | | | | | | |
| $SCn_{k+3}$ | | | | | | | | | | | | | | |
| $SCn_{k+2}$ | | | | | | | | | | | | | | |
| $SCn_{k+1}$ | | | | | | | | | | | | | | |
| $SCn_k$ | | | | | | | | | | | | | | |
| | | | | | | | ⋮ | | | | | | | |
| $SCn_{11}$ | | | | | | | | | | | | | | |
| $SCn_{10}$ | | | | | | | | | | | | | | |
| $SCn_9$ | | | | | | | | | | | | | | |
| $SCn_8$ | | | | | | | | | | | | | | |
| $SCn_7$ | //// | //// | | //// | //// | //// | //// | //// | //// | //// | //// | //// | //// | //// |
| $SCn_6$ | | | | | | | | | | | | | | |
| $SCn_5$ | | | | | | | | | | | | | | |
| $SCn_4$ | | | | | | | | | | | | | | |
| $SCn_3$ | | | | | | | | | | | | | | |
| $SCn_2$ | | | | | | | | | | | | | | |
| $SCn_1$ | | | | | | | | | | | | | | |
| $SCn_0$ | | | | | | | | | | | | | | |

FIG. 21

| | Slot (slot) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| ... | | | | | | | ... | | | | | | | |
| $SCn_{10}$ | | | | | | | | | | | | | | |
| $SCn_9$ | | | | | | | | | | | | | | |
| $SCn_8$ | | | | | | | | | | | | | | |
| $SCn_7$ | | | | | | | | | | | | | | |
| $SCn_6$ | | | | | | | | | | | | | | |
| $SCn_5$ | | | | | | | | | | | | | | |
| $SCn_4$ | | | | | | | | | | | | | | |
| $SCn_3$ | | | | | | | | | | | | | | |
| $SCn_2$ | | | | | | | | | | | | | | |
| $SCn_1$ | | | | | | | | | | | | | | |
| $SCn_0$ | | | | | | | | | | | | | | |

FIG. 22

FIG. 23

2400

Communication apparatus

2401

Transceiver
unit

2402

Processing unit

FIG. 24

Memory

25023

2500

2501

2503

Processor

25021

Memory

Communication
interface

Memory

25022

FIG. 25

2600

2610

Input/Output
interface

2620

Logic circuit

FIG. 26

## INTERNATIONAL SEARCH REPORT

| International application No. |
|---|
| **PCT/CN2022/125477** |

**A.    CLASSIFICATION OF SUBJECT MATTER**

H04L27/26(2006.01)i;  H04W4/12(2009.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 感知, 探测, 信号, 导频, 非导频, 影响, 资源, 资源块, 重叠, 重合, 叠加, 交叠, 复用, 位置, 障碍, 恒模, 占用, 参考信号, detect, resource, block, overlap, locat+, position, pilot, frequency, sens+, constant, modulus, signal

**C.    DOCUMENTS CONSIDERED TO BE RELEVANT**

| Category* | Citation of document, with indication, where appropriate, of the relevant passages | Relevant to claim No. |
|---|---|---|
| Y | CN 114501346 A (HUAWEI TECHNOLOGIES CO., LTD.) 13 May 2022 (2022-05-13) description, paragraphs 6, 94, and 168-193 | 17-24, 27-37 |
| Y | CN 106161323 A (DALIAN LINKTECH INFOSYSTEM CO., LTD.) 23 November 2016 (2016-11-23) description, paragraphs 87 and 158 | 17-24, 27-37 |
| Y | CN 107454032 A (NATIONAL UNIVERSITY OF DEFENSE TECHNOLOGY OF PLA) 08 December 2017 (2017-12-08) description, paragraph 13 | 17-24, 27-37 |
| A | WO 2021128299 A1 (HUAWEI TECHNOLOGIES CO., LTD.) 01 July 2021 (2021-07-01) entire document | 1-37 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2023** | **15 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/125477**

| Patent document cited in search report | | | Publication date (day/month/year) | Patent family member(s) | | | Publication date (day/month/year) |
|---|---|---|---|---|---|---|---|
| CN | 114501346 | A | 13 May 2022 | WO | 2022100499 | A1 | 19 May 2022 |
| CN | 106161323 | A | 23 November 2016 | None | | | |
| CN | 107454032 | A | 08 December 2017 | None | | | |
| WO | 2021128299 | A1 | 01 July 2021 | US | 2022337461 | A1 | 20 October 2022 |
| | | | | EP | 4068892 | A1 | 05 October 2022 |
| | | | | CA | 3163202 | A1 | 01 July 2021 |
| | | | | CN | 114902774 | A | 12 August 2022 |

Form PCT/ISA/210 (patent family annex) (July 2022)